(19) Europäisches Patentamt / European Patent Office / Office européen des brevets

(11) **EP 3 469 720 B1**

(12) **FASCICULE DE BREVET EUROPEEN**

(45) Date de publication et mention de la délivrance du brevet:
**13.05.2020 Bulletin 2020/20**

(21) Numéro de dépôt: **17723127.1**

(22) Date de dépôt: **16.05.2017**

(51) Int Cl.:
*H04B 1/69* (2011.01)     *H04L 27/10* (2006.01)

(86) Numéro de dépôt international:
**PCT/EP2017/061762**

(87) Numéro de publication internationale:
**WO 2017/211553 (14.12.2017 Gazette 2017/50)**

(54) **PROCÉDÉ DE GÉNÉRATION D'UN SIGNAL MODULÉ EN POSITION D'IMPULSIONS, PROCÉDÉ DE DÉMODULATION, PRODUIT PROGRAMME D'ORDINATEUR ET DISPOSITIFS CORRESPONDANTS**

VERFAHREN ZUR ERZEUGUNG EINES PULSPOSITIONSMODULIERTEN SIGNALS, DEMODULATIONSVERFAHREN UND ZUGEHÖRIGES COMPUTERPROGRAMMPRODUKT UND VORRICHTUNGEN

METHOD FOR GENERATING A PULSE-POSITION-MODULATED SIGNAL, DEMODULATION METHOD, AND CORRESPONDING COMPUTER PROGRAM PRODUCT AND DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.06.2016 FR 1655325**

(43) Date de publication de la demande:
**17.04.2019 Bulletin 2019/16**

(73) Titulaire: **B-Com**
**35510 Cesson-Sevigne (FR)**

(72) Inventeurs:
• **PAQUELET, Stéphane**
  **35700 Rennes (FR)**
• **SAVELLI, Patrick**
  **35200 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2011/000936      JP-A- 2011 149 806**
**US-A- 5 019 825      US-A1- 2012 314 730**

**Description**

**1 DOMAINE TECHNIQUE**

Le domaine de l'invention est celui de la transmission de données via une modulation en position d'impulsions, ou PPM (pour « Pulse-Position Modulation » en anglais).

Plus précisément, l'invention concerne une technique de génération d'un signal modulé PPM ainsi qu'une technique de démodulation d'un tel signal reçu, ces techniques présentant des caractéristiques communes avec la génération et la démodulation d'autres types de formes d'ondes permettant ainsi l'implémentation d'un émetteur et/ou récepteur multimode optimisé.

Une telle modulation du type PPM est largement utilisée dans le domaine des communications numériques. En particulier, il apparaît que la modulation utilisée par la technologie LoRa® dédiée aux objets connectés peut être interprétée comme appartenant à la catégorie des modulations PPM. Ainsi, l'invention a des applications dans tous les domaines de la vie personnelle et professionnelle dans lesquels les objets connectés sont présents, notamment, mais non exclusivement, dans les domaines de la santé, du sport, des applications domestiques (sécurité, électroménager, etc.), suivi d'objets, etc.

**2 ARRIERE-PLAN TECHNOLOGIQUE**

Présentés comme la « troisième révolution de l'Internet », les objets connectés sont en train de s'imposer dans tous les domaines de la vie quotidienne et de l'entreprise. La plupart de ces objets sont destinés à produire des données grâce à leurs capteurs intégrés afin de fournir des services à valeur ajoutée pour leur propriétaire.

De par les applications visées, ces objets connectés sont pour la plupart nomades. En particulier, ils doivent pouvoir transmettre les données produites, régulièrement ou à la demande, à un utilisateur déporté.

Pour ce faire, la transmission radio longue portée du type radio mobile cellulaire (2G/3G/4G...) a été une technologie de choix. Cette technologie permettait en effet de bénéficier d'une bonne couverture réseau dans la plupart des pays.

Cependant, l'aspect nomade de ces objets s'accompagne souvent d'un besoin en autonomie d'énergie. Or, même basés sur une des technologies radio mobile cellulaire les plus économes en énergie, les objets connectés actuels continuent de présenter une consommation rédhibitoire pour permettre un déploiement à grande échelle à un coût raisonnable.

Face à la problématique de la consommation du lien radio pour de telles applications nomades, de nouvelles technologies radio basse consommation et bas débit dédiées spécifiquement aux réseaux « Internet des Objets », c'est-à-dire des technologies radio pour des réseaux dits LPWAN (pour « Low-Power Wide-Area Networks » en anglais), sont en train de voir le jour. Plus particulièrement, ces technologies émergentes peuvent être classées en deux catégories :

- d'un côté, il existe des technologies propriétaires comme par exemple la technologie de la société Sigfox®, ou bien la technologie LoRa®, ou encore la technologie de la société Qowisio®. En pratique, ces technologies non standardisées reposent toutes sur l'utilisation de la bande de fréquences « Industriel, Scientifique et Médical », dite ISM, et sur la réglementation associée à son utilisation ;
- d'un autre côté, il existe plusieurs technologies promues par des organismes de normalisation. A titre d'exemple, on peut citer trois technologies en cours de standardisation auprès du 3GPP (pour « 3rd Generation Partnership Project » en anglais) : NB-IoT (pour « Narrow Band - Internet of Things » en anglais), LTE MTC (pour « Long Term Evolution - Machine Type Communication » en anglais) et EC-GPRS (pour « Extended Coverage - General Packet Radio Service » en anglais).

Dans ce contexte, il apparaît que différentes technologies dédiées à la transmission de données pour les objets connectés risquent de coexister, comme c'est le cas actuellement pour les communications du type cellulaire.

Or, la problématique du coût et de l'autonomie des objets connectés étant prépondérante, un besoin existe alors pour développer des solutions optimisées permettant de supporter différents types de modulations, que ce soit à l'émission ou à la réception, afin d'éviter les solutions superposant différentes technologies existantes et conduisant à des solutions coûteuses et peu efficaces en terme de consommation d'énergie.

Par ailleurs, certains opérateurs, comme Bouygues® ou Orange® en France, se sont déjà portés sur la technologie LoRa® pour déployer leur réseau dédié aux objets connectés.

Il existe donc un besoin pour une nouvelle technique permettant une approche multimode, que ce soit à l'émission ou à la réception, notamment adaptée à la modulation PPM utilisée par la technologie LoRa®.

**3 RESUME**

Dans un mode de réalisation de l'invention, il est proposé un procédé de génération d'un signal modulé en position d'impulsions. Ce signal modulé comprend une succession temporelle de formes d'onde parmi Ns formes d'ondes, une s-ème forme d'onde parmi les Ns formes d'ondes étant associée à un symbole de rang k d'une constellation de Ns symboles, k un entier de 0 à Ns-1. La s-ème forme d'onde résulte d'une permutation circulaire du motif de variation d'une forme d'onde de base sur une durée Ts, obtenue par un décalage temporel de k fois une durée temporelle élémentaire Tc, telle que Ns*Tc=Ts. Un tel procédé comprend les étapes suivantes, exécutées pour un symbole de rang k de la constellation de Ns symboles :

- obtention d'un ensemble de N coefficients de modulation $c_l^{(k)}$, l étant un entier variant dans un ensemble $S_\eta$ de taille N, un coefficient de modulation d'indice n parmi les N coefficients de modulation, noté $c_n^{(k)}$, s'exprimant comme le produit d'un coefficient de modulation de référence d'indice n, noté $c_n^{(r)}$, avec un terme de déphasage dont l'argument est proportionnel à n, le coefficient de modulation de référence $c_n^{(r)}$ étant issu de la décomposition en série de Fourier d'une forme d'onde de référence, parmi les Ns formes d'ondes, associée à un symbole de rang r ;

- génération de M échantillons temporels d'une k-ème forme d'onde par transformation de Fourier directe ou inverse de l'ensemble de N coefficients de modulation $c_l^{(k)}$.

Ainsi, l'invention propose une solution nouvelle et inventive pour permettre la génération d'un signal modulé suivant une modulation en position d'impulsions, i.e. pour lequel l'information est portée par une permutation circulaire du motif de variation d'une forme d'onde de base sur une durée d'un symbole suite à un décalage temporel.

Pour ce faire, la technique revendiquée propose de tenir compte, dans le domaine fréquentiel, des caractéristiques inhérentes à cette forme de modulation par décalage temporel. Plus particulièrement, la forme d'onde étant à support temporel borné, un ensemble discret de coefficients peut être obtenu par sa décomposition en série de Fourier. Par ailleurs, du fait de la translation temporelle qui existe entre les formes d'onde associées à deux symboles distincts, les coefficients de Fourier associés à chacun de ces symboles sont reliés entre eux via un terme de rotation de phase induisant un déphasage proportionnel à ladite translation.

Il apparaît ainsi que le signal modulé peut être généré via une transformée de Fourier d'un vecteur dont les termes sont proportionnels à des coefficients de la décomposition en série de Fourier d'une forme d'onde de référence, i.e. associée à un symbole de référence.

Ainsi, la génération du signal modulé peut être effectuée en réutilisant des blocs constitutifs de générateurs de signaux modulés tels que les signaux multiporteuses du type OFDM, optimisant par là-même le coût d'une solution du type multimode.

Selon un mode de réalisation, l'étape d'obtention de l'ensemble de N coefficients de modulation met en œuvre, pour le coefficient de modulation $c_n^{(k)}$ dudit ensemble, les sous-étapes suivantes :

- lecture, dans un premier dispositif de stockage, du coefficient de modulation de référence $c_n^{(r)}$ issu de la décomposition en série de Fourier de la forme d'onde de base;

- multiplication du coefficient de modulation de référence $c_n^{(r)}$ par le terme de déphasage dont l'argument est proportionnel à n, la multiplication délivrant le coefficient de modulation $c_n^{(k)}$.

Ainsi, seuls les coefficients de modulation de référence sont préalablement calculés et mémorisés dans un dispositif de stockage (mémoire, table, registre, support d'enregistrement, etc.), optimisant par là-même la capacité de stockage du dispositif.

En variante, au lieu de stocker directement les coefficients de modulation de référence $c_n^{(r)}$, on stocke des coefficients de modulation de référence modifiés, par exemple déjà multipliés par un terme de déphasage indépendant de k (e.g. multipliés par le terme de déphasage $e^{2j\pi n \frac{r}{N_s}}$, ce qui revient dans ce cas à stocker les coefficients de

modulation $c_n^{(0)}$ de la forme d'onde de base). L'obtention du terme de déphasage dont l'argument est proportionnel à n est alors simplifiée, de même que les calculs nécessaires à sa multiplication avec le coefficient de modulation de référence modifié.

Selon un mode de réalisation, l'étape d'obtention de l'ensemble de N coefficients de modulation met en œuvre une étape de lecture, dans un deuxième dispositif de stockage, des coefficients de modulation $c_l^{(k)}$ préalablement calculés.

Ainsi, les Ns ensembles de N coefficients de modulation sont préalablement calculés et mis en mémoire, permettant de s'affranchir d'une étape de multiplication embarquée et optimisant par là-même la consommation du dispositif mettant en œuvre le procédé revendiqué.

Selon un mode de réalisation, les coefficients de modulation de référence $c_l^{(r)}$ sont obtenus en mettant en œuvre les étapes suivantes :

- décomposition en série de Fourier de la forme d'onde de référence, délivrant un ensemble de coefficients initiaux,
- sélection d'un ensemble de N coefficients de modulation de référence parmi les coefficients initiaux, au moins en fonction d'un critère de minimisation d'une perte d'énergie.

Ainsi, seuls N coefficients parmi l'ensemble dénombrable mais infini de coefficients de Fourier sont utilisés dans la technique décrite, permettant par conséquent de minimiser les calculs embarqués et optimisant par là-même la consommation du dispositif mettant en œuvre le procédé revendiqué.

Par ailleurs, les N coefficients sont sélectionnés de manière à minimiser la perte d'énergie du signal ainsi généré par rapport à la forme d'onde attendue. Ainsi, la déformation de la forme d'onde est minimale pour une valeur de N donnée.

Selon différents modes de réalisation, le terme de déphasage est proportionnel à :

- $e^{-2j\pi n\frac{k}{N_S}}$ lorsque la transformation de Fourier est une transformation de Fourier inverse, ou

- $e^{+2j\pi n\frac{k}{N_S}}$ lorsque la transformation de Fourier est une transformation de Fourier directe.

Par exemple, si l'on stocke les coefficients de modulation de référence $c_n^{(r)}$, alors le terme de déphasage s'exprime comme $e^{-2j\pi n\frac{(k-r)}{N_S}}$ lorsque la transformation de Fourier est une transformation de Fourier inverse ou comme $e^{2j\pi n\frac{(k-r)}{N_S}}$ lorsque la transformation de Fourier est une transformation de Fourier directe. En variante, si l'on stocke des coefficients de modulation modifiés, par exemple déjà multipliés par le terme de déphasage $e^{2j\pi n\frac{r}{N_S}}$ (ce qui revient dans ce cas à stocker les coefficients de modulation $c_n^{(0)}$ de la forme d'onde de base), alors le terme de déphasage s'exprime comme $e^{-2j\pi n\frac{k}{N_S}}$ lorsque la transformation de Fourier est une transformation de Fourier inverse ou comme $e^{2j\pi n\frac{k}{N_S}}$ lorsque la transformation de Fourier est une transformation de Fourier directe.

Ainsi, seuls une fraction des NxNs coefficients de modulation est stockée, les termes de phase pouvant être précalculés et stockés dans une table et/ou calculés au fil de l'eau, par exemple à l'aide d'un opérateur du type CORDIC bien connu de l'homme du métier. Par ailleurs, la complexité peut encore être réduite en exploitant les symétries entre lignes trigonométriques.

Selon un mode de réalisation, l'ensemble de N coefficients de modulation $c_l^{(k)}$ forme un vecteur de modulation, et, si le nombre M d'échantillons temporels est supérieur au nombre N de coefficients de modulation $c_l^{(k)}$, (M - N) éléments nuls sont ajoutés au vecteur de modulation.

Ainsi, la transformée de Fourier implémentée sous forme de transformée de Fourier discrète, ou DFT (pour « Discrète Fourier Transform » en anglais) réalise également une fonction de suréchantillonnage, permettant par là-même d'éviter l'implémentation d'un module supplémentaire dédié à cette unique fonction.

Selon un mode de réalisation, la forme d'onde de base a une fréquence instantanée variant linéairement entre une première fréquence instantanée f0 et une deuxième fréquence instantanée f1 pendant la durée Ts, la deuxième fréquence instantanée f1 étant choisie telle que $f_1 = -f_0$, et le coefficient de modulation de référence $c_n^{(r)}$ étant donné par $c_n^{(r)} = 2(-1)^n(-j)^{\frac{N_S}{4}} e^{-2j\pi n \frac{r}{N_S}} \int_0^{\frac{1}{2}} e^{j\pi N_S v^2} \cos(2\pi n v) \, dv.$

Ainsi, la technique décrite permet l'implémentation d'un modulateur adapté à la génération d'un signal chirp modulé, tel qu'employé par exemple dans la technique LoRa® dédiée aux objets connectés, en réutilisant des blocs constitutifs de générateurs de signaux modulés tels que les signaux multiporteuses du type OFDM. Un générateur de signal OFDM existant peut ainsi être utilisé pour implémenter à moindre coût la modulation chirp dans la perspective d'un émetteur multimode.

Un autre avantage est que l'amplitude des coefficients décroît quand n croît i. e. que l'énergie des coefficients est concentrée sur les coefficients d'indice faible. L'ensemble de coefficients sélectionnés est de petite taille, ce qui réduit les coûts de calcul et de stockage.

Dans un mode de réalisation de l'invention, il est proposé un procédé de démodulation d'un signal reçu résultant d'une modulation d'un signal en position d'impulsions et de la transmission du signal modulé dans un canal de transmission. Le signal modulé comprend une succession temporelle de formes d'onde parmi Ns formes d'ondes telles que décrites précédemment. Un tel procédé comprend les étapes suivantes, exécutées pour M échantillons du signal reçu représentatifs d'une forme d'onde comprise dans le signal modulé :

- transformation de Fourier directe ou inverse appliquée aux M échantillons du signal reçu et délivrant N échantillons transformés $Y_l$, l un entier variant dans un ensemble $S_\eta$ de taille N ;

- obtention d'un ensemble de N coefficients de modulation $c_l^{(k)}$, l étant un entier variant dans l'ensemble $S_\eta$, un coefficient de modulation d'indice n parmi les N coefficients de modulation, noté $c_n^{(k)}$, s'exprimant comme le produit d'un coefficient de modulation de référence d'indice n, noté $c_n^{(r)}$, avec un terme de déphasage dont l'argument est proportionnel à n, le coefficient de modulation de référence $c_n^{(r)}$ étant issu de la décomposition en série de Fourier d'une forme d'onde de référence, parmi les Ns formes d'ondes, associée à un symbole de rang r ;

- détermination de Ns composantes de décision, à partir des N échantillons transformés et des N coefficients de modulation obtenus, une composante de décision d'indice l, notée composante $D_l$, s'exprimant comme fonction d'une transformée de Fourier directe ou inverse de N termes, avec l un entier de 0 à Ns-1, un terme d'indice n parmi les N termes, n un entier variant dans l'ensemble $S_\eta$, étant fonction d'un produit d'un échantillon transformé $Y_n$ avec un coefficient de modulation de référence $c_n^{(r)}$ ou avec le complexe conjugué dudit coefficient de modulation de référence obtenu ;

- décision du rang $\hat{k}$ du symbole porté par la forme d'onde associée aux M échantillons, à partir de la composante de décision présentant un extremum de valeur parmi les Ns composantes de décision, d'indice k, notée composante $D_k$.

Ainsi, l'invention concerne également un procédé de démodulation d'un signal reçu, correspondant à un signal modulé selon une modulation en position d'impulsions, i.e. pour lequel l'information est portée par un décalage temporel du motif de la forme d'onde de base.

Pour ce faire, la technique revendiquée propose de tenir compte, dans le domaine fréquentiel, des caractéristiques inhérentes à cette forme de modulation par décalage temporel. Plus particulièrement, un terme de déphasage lié à un tel décalage temporel apparaissant dans le domaine fréquentiel, il apparaît que le récepteur optimal au sens du maximum de vraisemblance peut s'exprimer dans ce domaine comme la transformée de Fourier d'un vecteur dont les termes sont fonction à la fois des coefficients de la décomposition en série de Fourier d'une forme d'onde de référence associée à un symbole de rang r dans la constellation de symboles et des échantillons obtenus en sortie d'une première transformée de Fourier appliquée au signal reçu.

Considérant Ns symboles possibles et M échantillons du signal reçu, il est commode de choisir en pratique M=N, et N un multiple de Ns, tous deux choisis préférentiellement comme des puissances de deux.

Ainsi, les traitements selon la technique décrite restent proportionnels à $N_s \ln(N_s)$ opérations alors qu'ils sont proportionnels à $N_S^2$ lorsque les Ns corrélations requises par le récepteur optimal au sens du maximum de vraisemblance sont implémentées selon les techniques connues.

Selon un mode de réalisation, les coefficients de modulation de référence $c_i^{(r)}$ sont obtenus en mettant en œuvre les étapes suivantes :

- décomposition en série de Fourier de la forme d'onde de référence, délivrant un ensemble de coefficients initiaux,
- sélection d'un ensemble de N coefficients de modulation de référence parmi les coefficients initiaux, au moins en fonction d'un critère de minimisation d'une perte d'énergie.

Ainsi, seuls N coefficients parmi l'ensemble dénombrable mais infini de coefficients de Fourier sont utilisés dans la technique décrite, permettant par conséquent de minimiser les calculs embarqués et optimisant par là-même la consommation du dispositif mettant en œuvre le procédé revendiqué.

Par ailleurs, les N coefficients sont sélectionnés de manière à minimiser la perte d'énergie du signal ainsi généré par rapport à la forme d'onde attendue. Ainsi, la déformation de la forme d'onde est minimale pour une valeur de N donnée.

Selon un mode de réalisation, la transformée de Fourier appliquée aux M échantillons du signal reçu est directe. Un tel procédé comprend une étape d'obtention de N paramètres représentatifs du canal de transmission. La k-ème composante $D_k$ s'exprime sous une forme proportionnelle à la partie réelle de $\sum_{n \in S_\eta} Y_n H_n^* c_n^{(r)*} e^{2j\pi \frac{nk}{N_s}}$, ou de son complexe conjugué, avec $H_n$, n un entier variant dans l'ensemble $S_\eta$ un paramètre représentatif du canal de transmission, obtenu en appliquant une transformée de Fourier directe à N échantillons temporels de la réponse impulsionnelle du canal.

Le choix de $S_\eta$ pour la démodulation peut se faire avec une méthode similaire à celle qui est employée lors de la génération du signal, selon le critère de minimisation de l'énergie.

Selon un mode de réalisation, la transformée de Fourier appliquée aux M échantillons dudit signal reçu est inverse. Un tel procédé comprend une étape d'obtention de N paramètres représentatifs du canal de transmission. La k-ème composante $D_k$ s'exprime sous une forme proportionnelle à la partie réelle de $\sum_{n \in S_\eta} Y_n H_n^* c_{-n}^{(r)*} e^{-2j\pi \frac{nk}{N_s}}$, ou de son complexe conjugué, avec $H_n$, n un entier variant dans l'ensemble $S_\eta$ un paramètre représentatif du canal de transmission, obtenu en appliquant une transformée de Fourier inverse à Ns échantillons temporels de la réponse impulsionnelle dudit canal.

Ainsi, dans des modes de réalisation, le récepteur optimal au sens du maximum de vraisemblance peut prendre en compte les effets du canal de propagation tout en conservant la complexité en $N_s \ln(N_s)$.

Selon un mode de réalisation, la forme d'onde de base a une fréquence instantanée variant linéairement entre une première fréquence instantanée f0 et une deuxième fréquence instantanée f1 pendant la durée Ts, la deuxième fréquence instantanée f1 étant choisie telle que $f_1 = -f_0$, et le coefficient de modulation de référence $c_n^{(r)}$ étant donné par

$$c_n^{(r)} = 2(-1)^n (-j)^{\frac{N_S}{4}} e^{-2j\pi n \frac{r}{N_S}} \int_0^{\frac{1}{2}} e^{j\pi N_S v^2} \cos(2\pi n v) \, dv.$$

Ainsi, la technique décrite permet l'implémentation d'un démodulateur optimal, au sens du maximum de vraisemblance, d'un signal chirp modulé notamment, tel qu'employé par exemple dans la technique LoRa® dédiée aux objets connectés, avec une complexité calculatoire moindre que l'implémentation directe d'un tel démodulateur selon les techniques connues. Le coût et la consommation d'une telle solution se trouvent ainsi réduits.

Un autre avantage est que l'amplitude des coefficients décroît quand n croît i. e. que l'énergie des coefficients est concentrée sur les coefficients d'indice faible. L'ensemble de coefficients sélectionnés est de petite taille, ce qui réduit les coûts de calcul et de stockage.

L'invention concerne également au moins un programme d'ordinateur, comprenant des instructions de code de programme pour la mise en œuvre d'au moins un procédé tel que décrit précédemment, selon l'un quelconque de ses différents modes de réalisation, lorsqu'il est exécuté sur un ordinateur.

Dans un autre mode de réalisation de l'invention, il est proposé un dispositif de génération d'un signal modulé en position d'impulsions. Le signal modulé comprend une succession temporelle de formes d'onde parmi Ns formes d'ondes telles que décrites précédemment. Le dispositif de génération comprend une machine de calcul reprogrammable ou une machine de calcul dédiée, apte à et configurée pour :

- obtenir un ensemble de N coefficients de modulation $c_l^{(k)}$, l étant un entier variant dans un ensemble $S_l$, un coefficient de modulation d'indice n parmi les N coefficients de modulation, noté $c_n^{(k)}$, s'exprimant comme le produit d'un coefficient de modulation de référence d'indice n, noté $c_n^{(r)}$, avec un terme de déphasage dont l'argument est proportionnel à n, le coefficient de modulation de référence $c_n^{(r)}$ étant issu de la décomposition en série de Fourier d'une forme d'onde de référence, parmi les Ns formes d'ondes, associée à un symbole de rang r ;
- générer M échantillons temporels d'une k-ème forme d'onde par transformation de Fourier directe ou inverse dudit ensemble de N coefficients de modulation $c_l^{(k)}$.

Un tel dispositif de génération est notamment apte à mettre en œuvre le procédé de génération d'un signal modulé en position d'impulsions selon l'invention (selon l'un quelconque des différents modes de réalisation précités).

Ainsi, les caractéristiques et avantages de ce dispositif sont les mêmes que ceux du procédé de génération décrit précédemment. Par conséquent, ils ne sont pas détaillés plus amplement.

Dans un autre mode de réalisation de l'invention, il est proposé un dispositif de démodulation d'un signal reçu résultant d'une modulation d'un signal en position d'impulsions et de la transmission du signal modulé dans un canal de transmission. Le signal modulé comprend une succession temporelle de formes d'onde parmi Ns formes d'ondes telles que décrites précédemment. Le dispositif de démodulation comprend une machine de calcul reprogrammable ou une machine de calcul dédiée, apte à et configurée pour :

- appliquer une transformation de Fourier directe ou inverse aux M échantillons du signal reçu et délivrer N échantillons transformés $Y_l$, l un entier variant dans un ensemble $S_n$ de taille N ;
- obtenir un ensemble de N coefficients de modulation $c_l^{(k)}$, l étant un entier variant dans l'ensemble $S_l$, un coefficient de modulation d'indice n parmi les N coefficients de modulation, noté $c_n^{(k)}$, s'exprimant comme le produit d'un coefficient de modulation de référence d'indice n, noté $c_n^{(r)}$, avec un terme de déphasage dont l'argument est proportionnel à n, le coefficient de modulation de référence $c_n^{(r)}$ étant issu de la décomposition en série de Fourier d'une forme d'onde de référence, parmi les Ns formes d'ondes, associée à un symbole de rang r ;
- déterminer Ns composantes de décision, à partir des N échantillons transformés, une composante de décision d'indice l, notée composante $D_l$, s'exprimant comme fonction d'une transformée de Fourier directe ou inverse de N termes, avec l un entier de 0 à Ns-1, un terme d'indice n parmi lesdits N termes, n un entier variant dans l'ensemble $S_n$, étant fonction d'un produit d'un échantillon transformé $Y_n$ avec un coefficient de modulation de référence $c_n^{(r)}$ obtenu ou avec le complexe conjugué dudit coefficient de modulation de référence obtenu ;
- décider du rang $\hat{k}$ du symbole porté par la forme d'onde associée aux M échantillons, à partir de la composante de décision présentant un extremum de valeur parmi les Ns composantes de décision, d'indice k, notée composante $D_k$.

Un tel dispositif de démodulation est notamment apte à mettre en œuvre le procédé de démodulation d'un signal reçu selon l'invention (selon l'un quelconque des différents modes de réalisation précités).

Ainsi, les caractéristiques et avantages de ce dispositif sont les mêmes que ceux du procédé de démodulation décrit précédemment. Par conséquent, ils ne sont pas détaillés plus amplement.

## 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 illustre les caractéristiques générales d'une modulation du type PPM ;
- les figures 2a et 2b illustrent les caractéristiques d'un signal chirp non modulé ainsi que les fréquences instantanées et les phases instantanées de différents signaux chirps modulés utilisés dans la technologie LoRa® ;

- les figures 3a et 3b illustrent des structures de génération de signaux modulés PPM selon différents modes de réalisation de l'invention ;
- la figure 4 illustre les principales étapes d'un procédé de génération d'un signal modulé PPM selon différents modes de réalisation de l'invention ;
- la figure 5 illustre la valeur des coefficients de modulation dans le cas d'une modulation LoRa® selon un mode de réalisation de l'invention ;
- les figures 6a et 6b illustrent des exemples de structures de dispositifs de génération de signaux modulés PPM selon différents modes de réalisation de l'invention ;
- la figure 7 illustre une structure de démodulation de signaux modulés PPM selon différents modes de réalisation de l'invention ;
- la figure 8 illustre les principales étapes d'un procédé de démodulation d'un signal modulé PPM selon différents modes de réalisation de l'invention ;
- la figure 9 illustre un exemple de structure de dispositif de démodulation d'un signal modulé PPM selon différents modes de réalisation de l'invention.

## 5 DESCRIPTION DETAILLEE DE L'INVENTION

Sur toutes les figures du présent document, les éléments et étapes identiques sont désignés par une même référence.

Le principe général de la technique décrite consiste à obtenir N coefficients de modulation représentatifs d'un signal modulé PPM portant un symbole de rang k dans une constellation de Ns symboles, chaque coefficient de modulation s'exprimant comme le produit d'un coefficient de modulation de référence avec un terme de déphasage représentatif du rang k du symbole considéré. Les coefficients de modulation permettent alors de générer le signal modulé PPM par application d'une transformée de Fourier, et de démoduler le même signal via une double transformée de Fourier implémentant le récepteur optimal au sens du maximum de vraisemblance.

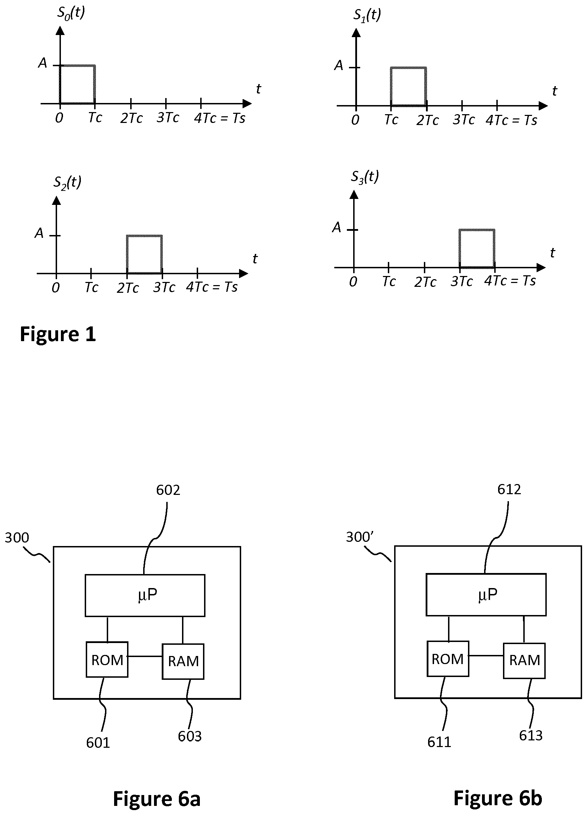

On décrit maintenant, en relation avec la **figure 1** les caractéristiques générales d'une modulation du type PPM considérée dans la présente demande.

De manière générale, la forme d'onde $s_k(t)$ d'un signal modulé PPM portant un symbole de rang k dans une constellation de Ns symboles pendant une durée Ts peut s'exprimer comme

$$s_k(t) = p(t - kT_c[T_S]) = \tilde{p}(t - kTc) \qquad \text{(Eq-1)}$$

où [.] désigne la fonction modulo, et où $p(t) = s_0(t)$ est une forme d'onde de base dont le motif de variation est décalé par permutation circulaire sur une durée Ts, via un décalage temporel de k fois une durée temporelle élémentaire Tc, telle que Ns*Tc=Ts, pour obtenir la forme d'onde $s_k(t)$ portant le symbole de rang k dans la constellation. Dans cette expression, $\tilde{p}(t - kTc)$ est la fonction Ts-périodique dérivée de p(t), i.e. telle que $\tilde{p}(t + nT_s) = p(t)$ pour $t \in [0, T_s]$ et $\forall\, n \in \mathbb{Z}$.

Ainsi, dans le cas d'une constellation de quatre symboles (i.e. Ns=4), les formes d'ondes $s_0(t)$, $s_1(t)$, $s_2(t)$ et $s_3(t)$, représentant respectivement les symboles de rang 0, 1, 2 et 3 dans la constellation, résultent d'une permutation circulaire du motif de variation d'une forme d'onde de base sur une durée Ts, obtenue par un décalage temporel de respectivement 0, 1, 2 et 3 fois la durée temporelle élémentaire Tc.

Dans le cas illustré sur la figure 1, la forme d'onde de base est une porte temporelle de support [0, $T_c$] et d'amplitude A. Ainsi, les formes d'ondes $s_0(t)$, $s_1(t)$, $s_2(t)$ et $s_3(t)$, représentant respectivement les symboles de rang 0, 1, 2 et 3 dans la constellation de quatre symboles, sont obtenues par un simple décalage temporel de la forme d'onde de base de respectivement 0, 1, 2 et 3 fois la durée temporelle élémentaire Tc.

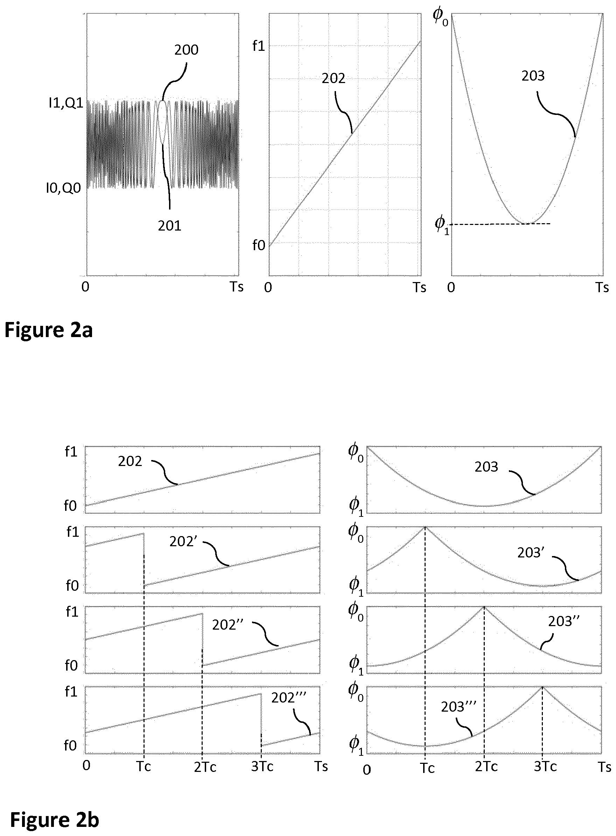

On décrit maintenant, en relation avec les **figures 2a et 2b** les caractéristiques d'un signal chirp non modulé ainsi que les fréquences instantanées et les phases instantanées de différents signaux chirps modulés utilisés dans la technologie LoRa®.

Par exemple, le document de brevet EP 2 449 690 B1 décrit une technique sur laquelle se fonde la technologie LoRa®, la transmission de l'information est basée sur la modulation d'un signal chirp de base. Comme représenté sur la figure 2a, la fréquence instantanée 202 du signal chirp de base varie linéairement entre une première fréquence instantanée f0 et une deuxième fréquence instantanée f1 pendant la durée Ts d'un symbole. Une telle fréquence instantanée est ici représentative de la vitesse de rotation dans le plan complexe du vecteur dont les coordonnées sont données par les signaux en phase 200 et en quadrature 201 représentant le signal modulant destiné à moduler la porteuse radio de manière à générer le signal chirp de base radiofréquence.

Le signal chirp étant à enveloppe constante, le signal en phase 200, respectivement en quadrature 201, oscille entre deux valeurs extrêmales, I0 et I1, respectivement Q0 et Q1. Seule la fréquence de ces signaux varie linéairement dans le temps comme la fréquence instantanée 202 du signal chirp de base résultant. De par la variation linéaire de la fréquence instantanée 202, le signal chirp de base ainsi défini présente une phase instantanée 203 qui varie de manière quadratique entre deux valeurs $\phi_0$ et $\phi_1$ pendant la durée Ts, la fréquence instantanée étant la dérivée de la phase instantanée.

Les signaux chirp modulés sont alors obtenus par permutation circulaire du motif de variation de la fréquence instantanée du signal chirp de base, sur une durée Ts, obtenue suite à un décalage temporel de k fois une durée temporelle élémentaire, dite durée « chip », Tc. L'indice k est alors représentatif du rang d'un symbole dans une constellation de Ns symboles et l'on a alors Ns*Tc=Ts. À titre illustratif, la figure 2b représente la fréquence instantanée 202, 202', 202", 202'" et la phase instantanée 203, 203', 203", 203'" de différents signaux chirps modulés correspondant respectivement à k=0, k=1, k=2 et k=3, i.e. permettant la transmission de l'information sur la base d'une constellation de quatre symboles. Le signal chirp de base, correspondant à k=0, est alors interprété dans ce cas comme portant le symbole de rang zéro dans la constellation.

Les inventeurs ont constaté que, selon cette technologie, la détermination de la valeur d'un symbole reçu via un tel signal, i.e. la détermination de son rang k dans la constellation de N symboles, est équivalente à la détermination de l'indice k ayant servi de base au calcul du décalage temporel utilisé pour engendrer le motif de phase et de fréquence instantanées du signal chirp modulé en question.

Il apparaît par ailleurs que le signal chirp de base peut s'exprimer dans le domaine temporel, et sur la durée d'une période symbole, i.e. pour t allant de 0 à Ts comme

$$p(t) = s_0(t) = e^{j\phi(t)}$$

où

$$\phi(t) = 2\pi\left(f_0 + \frac{f_1 - f_0}{2T_s}t\right)t + \phi_0$$

avec $\phi_0$ la valeur initiale de la phase.

En pratique, le signal LoRa® est tel que la bande passante du signal chirp, i.e. $|f_1 - f_0|$, est ajustée à l'inverse de la durée chip Tc et la deuxième fréquence instantanée f1 est choisie telle que $f_1 = -f_0$. Sachant que Ts=Ns*Tc, l'expression de la phase instantanée du signal chirp peut alors se réécrire comme

$$\phi(t) = \frac{2\pi}{T_c}\sigma\left(\frac{t}{2N_sT_c} - \frac{1}{2}\right)t + \phi_0$$

avec σ un paramètre appartenant à {-1,1} permettant de modéliser aussi bien des signaux chirps montants (i.e. avec une fréquence instantanée croissante), que descendants (i.e. avec une fréquence instantanée décroissante).

L'expression analytique, $s_k(t)$, d'un chirp modulé par un symbole de rang k dans la constellation de Ns symboles (k étant donc compris entre 0 et Ns-1), et correspondant donc à une permutation circulaire du motif du signal chirp de base comme décrit ci-dessus, s'exprime alors comme

$$s_k(t) = s_0(t - kT_c[T_S]) = e^{j\phi(t-kT_c[T_S])} \qquad \text{(Eq-2)}$$

En comparant cette équation avec (Eq-1), il apparaît ainsi que les signaux chirps modulés tel qu'utilisés dans la technologie LoRa® correspondent à une modulation PPM d'un signal chirp de base $s_0(t)$.

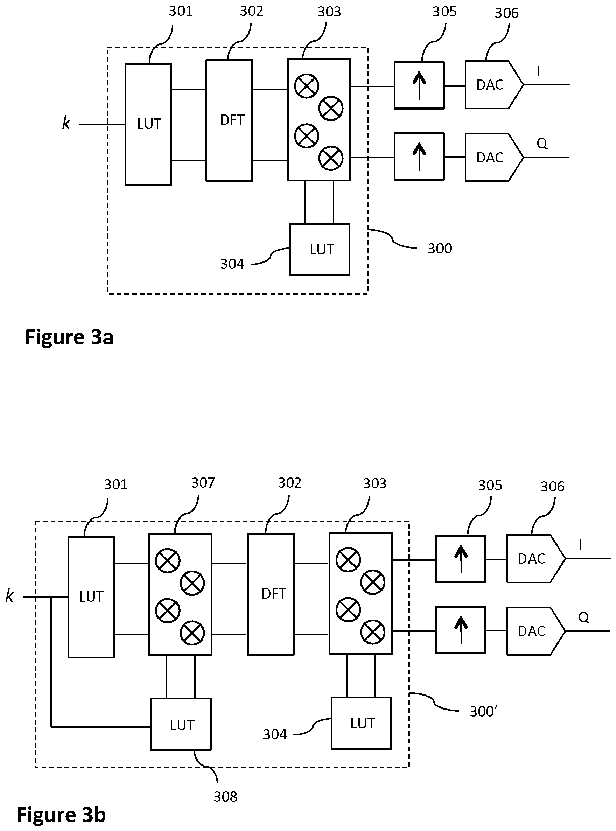

On décrit maintenant, en relation avec les **figures 3a et 3b** des structures de génération de signaux modulés PPM selon différents modes de réalisation de l'invention.

Plus particulièrement, un dispositif de génération de signaux modulés PPM 300, 300' reçoit le symbole de rang k dans une constellation de Ns symboles, ce rang k ayant été préalablement obtenu par une mise en correspondance des bits de données sur la constellation de Ns symboles.

Dans un premier mode de réalisation (illustré sur la figure 3a), un dispositif de stockage de coefficients de modulation 301 délivre alors un ensemble de N coefficients de modulation correspondant au symbole de rang k. Dans des variantes, le dispositif de stockage de coefficients de modulation 301 consiste en une mémoire, en des registres, en un support d'enregistrement, ou en tout autre équivalent. Les N coefficients de modulation servent alors de vecteur d'entrée à un module de transformée de Fourier discrète 302.

Dans un deuxième mode de réalisation (illustré sur la figure 3b), le vecteur d'entrée du module de transformée de Fourier discrète 302 correspond aux N coefficients de modulation délivrés par le dispositif de stockage de coefficients de modulation 301 multipliés chacun par un terme de déphasage délivré par le générateur de termes de déphasage 308. La multiplication de chaque coefficient de modulation par un terme de déphasage est alors effectuée par un premier multiplieur complexe 307.

Le module de transformée de Fourier discrète 302 délivre alors M échantillons temporels de la forme d'onde associée au symbole de rang k sur la durée symbole Ts à un deuxième multiplieur complexe 303. Dans une variante, M=N, et le nombre d'échantillons délivrés par le module de transformée de Fourier discrète 302 est identique au nombre de coefficients de modulation lui servant de vecteur d'entrée. Ainsi la complexité du module de transformée de Fourier discrète 302 est minimale. Dans une autre variante, M>N, et le module de transformée de Fourier discrète 302 réalise également une fonction de suréchantillonnage, minimisant par là-même les fonctionnalités devant être implémentées dans le dispositif.

Dans un mode de réalisation, le module de transformée de Fourier discrète 302 implémente une transformée de Fourier directe. Dans un autre mode de réalisation, le module de transformée de Fourier discrète 302 implémente une transformée de Fourier inverse.

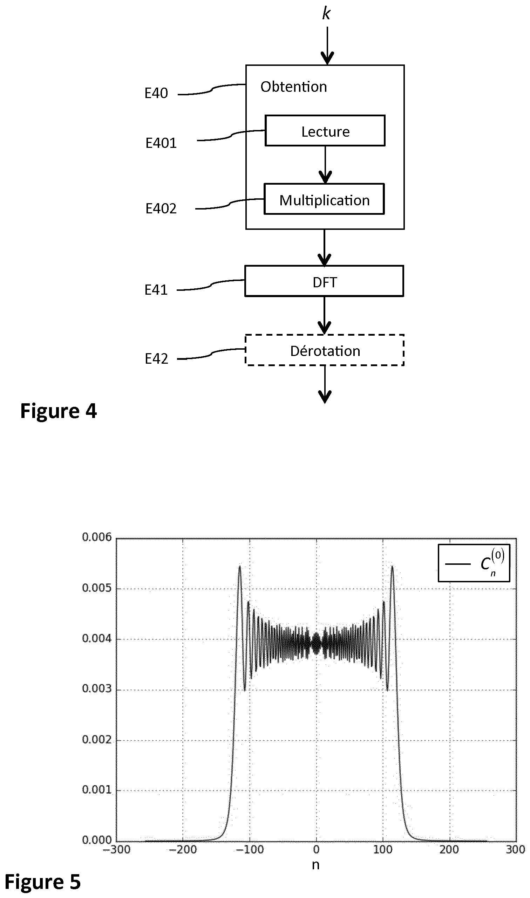

Selon un mode de réalisation particulier, le deuxième multiplieur complexe 303 réalise alors la multiplication complexe de chacun des M échantillons temporels délivré par le module de transformée de Fourier discrète 302 par un terme de dérotation délivré par le générateur de termes de dérotation 304, cette dérotation permettant l'implémentation de la transformée de Fourier directe du module de transformée de Fourier discrète 302 selon une structure classique comme détaillé ci-dessous en relation avec la figure 4.

Le dispositif de génération de signaux modulés PPM 300, 300' selon la technique décrite délivre alors les M échantillons temporels fournis par le deuxième multiplieur complexe 303 à un module de suréchantillonnage 305 (par exemple un filtre à phase linéaire du type CIC pour « Cascaded Integrator-Comb » en anglais, ou tout autre équivalent) avant conversion en un signal analogique par un convertisseur numérique analogique, ou DAC, 306 (par exemple un convertisseur flash, ou à base de modulateur sigma-delta, ou du type SAR pour « Successive Approximation Register » en anglais, ou tout autre équivalent) permettant par là-même de relâcher les contraintes sur ce dernier étage. Ainsi, des composantes en phase I et en quadrature Q de la forme d'onde analogique portant le symbole de rang k sont générées. Ces composantes I et Q sont alors utilisées pour moduler une porteuse radiofréquence, ou RF, via l'utilisation d'un émetteur RF connu de l'homme du métier (par exemple un émetteur à conversion directe, superhétérodyne ou toute architecture équivalente), implémentant un modulateur en quadrature et délivrant un signal modulé RF dont une enveloppe complexe est l'image de la forme d'onde délivrée par le dispositif de génération 300, 300'.

On décrit maintenant, en relation avec les **figures 4 et 5** les étapes d'un procédé de génération d'un signal modulé PPM selon différents modes de réalisation de l'invention.

Lors d'une étape d'obtention E40, N coefficients de modulation $c_l^{(k)}$, l étant un entier variant dans l'ensemble $S_n$, associés à la forme d'onde portant le symbole de rang k dans la constellation de symboles sont obtenus.

En effet, reconsidérant les caractéristiques liées aux formes d'ondes d'un signal modulé PPM décrites ci-dessus en relation avec la figure 1, il apparaît que ces formes d'ondes ont un support temporel fini [0, $T_s$]. Il peut ainsi être envisagé de les exprimer sur la base d'une décomposition en série de Fourier de leur fonction périodisée.

Pour ce faire, on peut remarquer que la fonction Ts-périodique $\tilde{p}(t - kTc)$ définie ci-dessus en relation avec l'équation (Eq-1) peut se décomposer comme

$$\tilde{p}(t) = \sum_{n=-\infty}^{+\infty} c_n e^{2j\pi n \frac{t}{T_s}}$$

avec $c_n = \frac{1}{T_s} \int_{-\frac{T_s}{2}}^{\frac{T_s}{2}} \tilde{p}(t) e^{-2j\pi n \frac{t}{T_s}} dt.$

De la sorte, la forme d'onde $s_k(t)$ du signal modulé PPM portant le symbole de rang k dans la constellation de Ns symboles peut s'exprimer suivant

$$s_k(t) = \sum_{n=-\infty}^{+\infty} c_n e^{-2j\pi \frac{nk}{N_s}} e^{2j\pi n \frac{t}{T_s}} = \sum_{n=-\infty}^{+\infty} c_n^{(k)} e^{2j\pi n \frac{t}{T_s}} \qquad \text{(Eq-3)}$$

avec

$$c_n^{(k)} = c_n e^{-2j\pi n \frac{k}{N_s}}$$

Il apparaît en particulier que $c_n^{(0)} = c_n$ et donc que

$$c_n^{(k)} = c_n^{(0)} e^{-2j\pi n \frac{k}{N_s}} \qquad\qquad \text{(Eq-4)}$$

De manière générale, les coefficients de modulation $c_l^{(k)}$ associés à la forme d'onde portant le symbole de rang k dans la constellation de Ns symboles peuvent s'exprimer en fonction des coefficients de modulation $c_l^{(r)}$ associés à la forme d'onde portant un symbole de référence de rang r dans cette même constellation. En effet, l'équation (Eq-4) nous donne que, pour un coefficient de modulation d'indice n

$$c_n^{(k)} = c_n^{(r)} e^{-2j\pi n \frac{(k-r)}{N_s}} \qquad\qquad \text{(Eq-5)}$$

Dans un mode de réalisation, la forme d'onde de base a une fréquence instantanée variant linéairement entre une première fréquence instantanée f0 et une deuxième fréquence instantanée f1 pendant la durée Ts, comme par exemple un signal chirp de base utilisé dans la technologie LoRa® et décrit ci-dessus en relation avec les figures 2a et 2b. Dans ce cas, l'expression de la forme d'onde $s_k(t)$ donnée par l'équation (Eq-2) peut se mettre sous la forme suivante

$$s_k(t) = e^{2j\pi\sigma\frac{N_s}{2}\overline{\phi}\left(\frac{1}{N_s}\left(\frac{t}{T_c}-k\right)\right)} \triangleq g\left(\frac{1}{N_s}\left(\frac{t}{T_c}-k\right)\right)$$

avec $\overline{\phi}$ une fonction définie par $\overline{\phi}(u) = (u-1)u$ pour $u \in [0,1]$ et périodisée sur $\mathbb{R}$ avec une période de 1.

De la sorte, les coefficients de modulation $c_n^{(0)} = c_n$, défini par $c_n = \int_{-\frac{1}{2}}^{\frac{1}{2}} g(u) e^{-2j\pi n u} du$, s'expriment dans ce mode de réalisation comme

$$c_n = \int_{-\frac{1}{2}}^{\frac{1}{2}} e^{j\pi N_s \sigma \overline{\phi}(u)} e^{-2j\pi nu} \, du$$

$$= \int_{-\frac{1}{2}}^{0} e^{j\pi N_s \sigma (u+1)u} e^{-2j\pi nu} \, du + \int_{0}^{\frac{1}{2}} e^{j\pi N_s \sigma (u-1)u} e^{-2j\pi nu} \, du$$

$$= \int_{0}^{\frac{1}{2}} e^{j\pi N_s \sigma (u-1)u} e^{2j\pi nu} \, du + \int_{0}^{\frac{1}{2}} e^{j\pi N_s \sigma (u-1)u} e^{-2j\pi nu} \, du$$

$$= 2 \int_{0}^{\frac{1}{2}} e^{j\pi N_s \sigma \left( \left( u - \frac{1}{2} \right)^2 - \frac{1}{4} \right)} \cos(2\pi nu) \, du$$

$$= 2 e^{-j\pi\sigma \frac{N_s}{4}} \int_{-\frac{1}{2}}^{0} e^{j\pi N_s \sigma v^2} \cos\left( 2\pi n \left( v + \frac{1}{2} \right) \right) dv$$

Soit

$$c_n = 2(-1)^n (-\sigma j)^{\frac{N_s}{4}} \int_0^{\frac{1}{2}} e^{j\pi\sigma N_s v^2} \cos(2\pi nv) \, dv \qquad \text{(Eq-6)}$$

L'amplitude des coefficients de modulation $c_n^{(0)} = c_n$ donnés par cette équation, et correspondant à la forme d'onde LoRa®, est représentée sur la figure 5 en fonction de l'indice n. Il apparaît alors que cette amplitude est décroissante lorsque n croit, i.e. que l'énergie des coefficients de modulation $c_n^{(0)} = c_n$ est concentrée sur les coefficients d'indice n faible (par exemple N inférieur à 150).

Il s'agit en fait d'un résultat général sur les coefficients de Fourier qui reste ici valable pour les coefficients de modulation $c_l^{(k)}$ associés à la forme d'onde portant le symbole de rang k. En effet, seul un terme de déphasage présentant une amplitude constante différencie les coefficients de modulation associés à la forme d'onde portant un symbole de rang donné des coefficients de modulation associés à la forme d'onde portant un symbole d'un autre rang si l'on se réfère aux équations (Eq-4) et (Eq-5). Il en résulte que le nombre N reste valable quel que soit le rang du symbole considéré.

Ainsi, dans un mode de réalisation, un ensemble fini $S_\eta$ de N coefficients de modulation $c_l^{(k)}$ est sélectionné parmi l'ensemble dénombrable mais infini de coefficients de Fourier associés à la forme d'onde portant le symbole de rang k. Dans une variante, les N coefficients de modulation sont sélectionnés de sorte à minimiser la perte d'énergie sur la forme d'onde obtenue par troncature de la série de Fourier. Plus particulièrement, les N coefficients de modulation sont sélectionnés en comparant la somme de leur module au carré à $\eta$ fois (par exemple 0,95 fois) la somme module au carré de tous les coefficients de Fourier. Ainsi, 100 * $\eta$ pour cent de l'énergie des symboles est reconstituée. Plus particulièrement, l'ensemble fini $S_\eta$ de N coefficients de modulation est choisi de sorte que :

$$\sum_{n \in S_\eta} \left| c_n^{(k)} \right|^2 \geq \eta \sum_{n \in \mathbb{Z}} \left| c_n^{(k)} \right|^2$$

Du fait que les modules des coefficients de modulation ne varient pas avec k, cette inégalité reste vérifiée pour un rang différent et donc l'ensemble $S_n$ vaut pour tous les symboles.

Les N coefficients de modulation associés à la forme d'onde portant le symbole de rang k ainsi sélectionnés sont alors stockés dans le dispositif de stockage de coefficients de modulation 301. Dans une variante, ces étapes de calcul et de sélection des N coefficients de modulation sont mises en œuvre lors de phases préalables à l'utilisation du dispositif de génération 300, 300', le stockage proprement dit dans le dispositif de stockage de coefficients de modulation 301 se faisant par exemple lors de la fabrication du dispositif de génération 300, 300', ou lors d'une phase d'initialisation du dispositif (par exemple à la mise sous tension), ou encore via une mise à jour en temps réel pendant le fonctionnement du dispositif de génération 300, 300' (e.g. pendant une mise à jour dite « OTA » pour « Over The Air » en anglais).

Ainsi, dans le mode de réalisation décrit ci-dessus en relation avec la figure 3a, les N coefficients de modulation $c_l^{(k)}$ obtenus lors de l'étape d'obtention E40 sont directement délivrés par le dispositif de stockage de coefficients de modulation 301 au module de transformée de Fourier discrète 302 lors de la mise en œuvre d'une sous-étape de lecture E401.

Plus particulièrement, comme la constellation considérée comprend Ns symboles, dans ce mode de réalisation le dispositif de stockage de coefficients de modulation 301 stocke Ns*N coefficients de modulation, permettant par là-même de s'affranchir de différents calculs embarqués et d'optimiser ainsi la consommation du dispositif mettant en œuvre la technique décrite.

Dans un autre mode de réalisation décrit ci-dessus en relation avec la figure 3b, le dispositif de stockage de coefficients de modulation 301 ne stocke que les N coefficients de modulation de référence $c_l^{(r)}$ associés à la forme d'onde portant le symbole de référence de rang r. En effet, l'équation (Eq-5) nous montre que le coefficient de modulation d'indice n associé à la forme d'onde portant le symbole de rang k est obtenu en multipliant le coefficient de modulation de référence $c_n^{(r)}$ par le terme de déphasage $e^{-2j\pi n\frac{(k-r)}{N_S}}$.

Ainsi, lors d'une sous-étape de multiplication E402, le coefficient de modulation de référence $c_n^{(r)}$ d'indice n (délivré par le dispositif de stockage de coefficients de modulation 301 lors de la sous-étape de lecture E401), est multiplié via le premier multiplieur complexe 307 par le terme de déphasage $e^{-2j\pi n\frac{(k-r)}{N_S}}$ délivré par le générateur de termes de déphasage 308.

Dans une variante, le dispositif de stockage de coefficients de modulation 301 stocke un coefficient de modulation de référence modifié, i.e. le coefficient de modulation de référence $c_n^{(r)}$ déjà multiplié par un terme de déphasage indépendant de k. Il peut s'agir par exemple du terme $e^{2j\pi n\frac{r}{N_S}}$, ce terme étant indépendant de k. Dans ce cas particulier, la combinaison du terme $e^{2j\pi n\frac{r}{N_S}}$ avec $c_n^{(r)}$ conduit à nouveau au stockage du terme $c_n^{(0)}$ dans le dispositif de stockage de coefficients de modulation 301. Le terme de déphasage délivré par le générateur de termes de déphasage 308 se réduit alors à nouveau à $e^{-2j\pi n\frac{k}{N_S}}$, simplifiant par là-même les calculs effectués au fil de l'exécution du procédé décrit.

Dans une variante, les termes de déphasage sont préalablement calculés et stockés dans le générateur de termes de déphasage 308 qui prend dans ce cas la forme d'une mémoire, de registres, d'un support d'enregistrement, ou de tout autre équivalent. Dans une autre variante, les termes de déphasage sont calculés au fil de l'eau, par exemple à l'aide d'un opérateur du type CORDIC bien connu de l'homme du métier.

Lors d'une étape E41, une transformée de Fourier mise en œuvre par le module de transformée de Fourier discrète 302 est appliquée aux N coefficients de modulation $c_l^{(k)}$ associés à la forme d'onde portant le symbole de rang k et obtenus lors de la mise en œuvre de l'étape E40.

En effet, sur la base de l'équation (Eq-3) et tenant compte de la sélection effectuée sur les coefficients de modulation parmi l'infinité possible, la k-ème forme d'onde portant le symbole de rang k peut être approximée par la forme d'onde $\tilde{s}_k(t)$ s'exprimant par

$$\tilde{s}_k(t) = \sum_{n \in S_\eta} c_n^{(k)} e^{2j\pi n \frac{t}{T_s}}$$

Plus particulièrement, considérant une version échantillonnée de ce signal temporel au rythme $\frac{1}{T} = M \times \frac{1}{T_s}$, avec $M \geq N$, on peut écrire

$$\tilde{s}_k(mT) = \sum_{n \in S_\eta} c_n^{(k)} e^{2j\pi \frac{nm}{M}}$$

avec m allant de 0 à M-1.

Il apparaît ainsi que les M échantillons temporels (équirépartis sur la durée [0, $T_s$]) de la forme d'onde $\tilde{s}_k(t)$ approximant la forme d'onde $s_k(t)$ portant le symbole de rang k, s'expriment comme le résultat d'une transformée de Fourier discrète inverse des N coefficients de modulation correspondant.

Plus particulièrement, considérant que l'ensemble fini $S_\eta$ de N coefficients de modulation choisis parmi l'infinité possible est de la forme $S_\eta = [-L, L - 1]$ avec N=2L, on peut écrire que

$$\tilde{s}_k(mT) = e^{-2j\pi \frac{mL}{M}} \sum_{n=0}^{2L-1} c_{n-L}^{(k)} e^{2j\pi \frac{nm}{M}} \qquad \text{(Eq-7)}$$

Il apparaît ainsi que les M échantillons temporels de la forme d'onde $\tilde{s}_k(t)$ approximant la forme d'onde $s_k(t)$ s'expriment comme une transformée de Fourier inverse, implémentée selon une structure classique (i.e. correspondant à une somme de 0 à N-1), des N=2L coefficients de modulation $c_l^{(k)}$ associés à la forme d'onde portant le symbole de rang k et obtenus lors de la mise en œuvre de l'étape E40.

Selon un mode de réalisation particulier, les M échantillons transformés délivrés par le module de transformée de Fourier discrète 302 implémentant une telle transformée de Fourier discrète inverse sont alors fournis au deuxième multiplieur complexe 303 pour la mise en œuvre d'une dérotation lors d'une étape E42.

Plus particulièrement, la dérotation correspond à la multiplication terme à terme par le deuxième multiplieur complexe 303 des M échantillons délivrés par le module de transformée de Fourier discrète 302 avec le terme de dérotation $e^{-2j\pi \frac{mL}{M}}$ délivré par le générateur de termes de dérotation 304 dans le but de fournir les M échantillons $\tilde{s}_k(mT)$ selon l'équation (Eq-7) ci-dessus.

Dans une variante, les termes de dérotation sont préalablement calculés et stockés dans le générateur de termes de dérotation 304 qui prend dans ce cas la forme d'une mémoire, de registres, d'un support d'enregistrement, ou de tout autre équivalent. Dans une autre variante, les termes de dérotation sont calculés au fil de l'eau, par exemple à l'aide d'un opérateur du type CORDIC bien connu de l'homme du métier.

Par ailleurs, reconsidérant l'équation (Eq-7) ci-dessus, il apparaît qu'un changement de variable de n vers 2L-1-n conduit à l'expression

$$\tilde{s}_k(mT) = e^{2j\pi \frac{m(L-1)}{M}} \sum_{n=0}^{2L-1} c_{L-1-n}^{(k)} e^{-2j\pi \frac{nm}{M}} \qquad \text{(Eq-8)}$$

Ainsi, dans un autre mode de réalisation, la transformée de Fourier implémentée dans le module de transformée de Fourier discrète 302 est une transformée de Fourier directe et les N coefficients de modulation associés à la forme d'onde portant le symbole de rang k obtenus lors de la mise en œuvre de l'étape E40 sont ceux d'indice opposé à ceux utilisés lorsque la transformée de Fourier implémentée dans le module de transformée de Fourier 302 est une transformée de Fourier inverse. Plus particulièrement, dans le mode de réalisation correspondant à l'implémentation de l'équation (Eq-8), la transformée de Fourier discrète directe est appliquée aux coefficients de modulation $c_{-l}^{(k)}$ avec l de -L+l à L, les coefficients de modulation $c_l^{(k)}$ étant obtenus suivant la technique décrite ci-dessus, selon l'un quelconque de ses différents modes de réalisation.

Par ailleurs, dans ce mode de réalisation les termes de dérotation délivrés par le générateur de termes de dérotation 304 correspondent aux M termes $e^{2j\pi\frac{m(L-1)}{M}}$, m allant de 0 à M-1.

Dans une variante, M est supérieur à N et la transformée de Fourier réalise également une fonction de suréchantillonnage, permettant par là-même d'éviter l'implémentation d'un module supplémentaire, par exemple le module de suréchantillonnage 305 dédié à cette unique fonction. Dans ce cas, (M - N) éléments nuls sont ajoutés au vecteur de modulation constitué par les N coefficients de modulation fournis au module de transformée de Fourier discrète 302 de manière à obtenir les M échantillons temporels de la forme d'onde $\tilde{s}_k(t)$ approximant la forme d'onde $s_k(t)$ via une transformée de Fourier discrète sur M éléments.

Dans une autre variante M s'exprime comme une puissance de deux. Ainsi, la transformée de Fourier peut être implémentée suivant une transformée de Fourier rapide ou FFT (pour « Fast Fourier Transform », en anglais) selon un algorithme particulièrement efficace.

Les **figures 6a et 6b** présentent des exemples de structures de dispositif de génération de signaux modulés PPM permettant la mise en œuvre d'un procédé de génération décrit en relation avec la figure 4 selon différents modes de réalisation de l'invention.

Le dispositif de génération de signaux modulés PPM 300, 300' comprend une mémoire vive 603, 613 (par exemple une mémoire RAM), une unité de traitement 602, 612 équipée par exemple d'un processeur, et pilotée par un programme d'ordinateur stocké dans une mémoire morte 601, 611 (par exemple une mémoire ROM ou un disque dur). A l'initialisation, les instructions de code du programme d'ordinateur sont par exemple chargées dans la mémoire vive 603, 613 avant d'être exécutées par le processeur de l'unité de traitement 602, 612.

Ces figures 6a et 6b illustrent seulement une manière particulière, parmi plusieurs possibles, de réaliser le dispositif de génération de signaux modulés PPM 300, 300' afin qu'il effectue certaines étapes du procédé détaillé ci-dessus en relation avec la figure 4 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif de génération de signaux modulés PPM 300, 300' est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

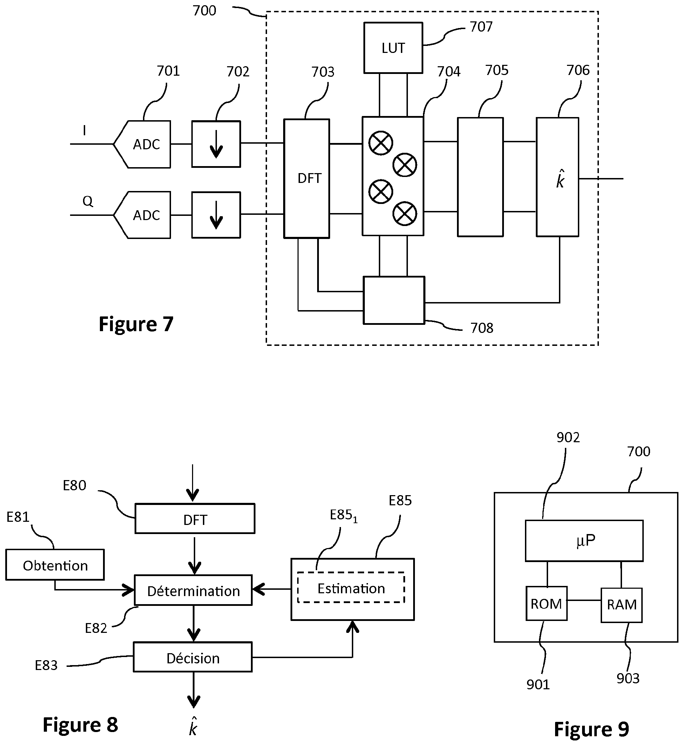

On décrit maintenant, en relation avec la **figure 7**, une structure de démodulation de signaux modulés PPM reçus selon différents modes de réalisation de l'invention.

Plus particulièrement, cette figure illustre les modules utilisés pour effectuer les traitements sur les signaux en phase, I, et en quadrature, Q, représentant le signal modulant obtenu après démodulation radiofréquence, ou démodulation RF, du signal radiofréquence reçu (dans la suite de cette demande de brevet, le terme démodulation RF désigne la transposition en bande de base du signal reçu, cette transposition délivrant des signaux I et Q analogiques représentant le signal modulant la porteuse RF reçue, et le terme démodulation désigne les traitements effectués sur les signaux I et Q, souvent après échantillonnage et quantification, conduisant à la détermination de l'information contenue dans le signal modulant).

En pratique, de tels signaux I et Q sont obtenus via l'utilisation d'un récepteur RF connu de l'homme du métier (par exemple un récepteur à conversion directe, superhétérodyne ou toute architecture équivalente), implémentant un démodulateur RF en quadrature et délivrant deux voies analogiques I et Q.

Les signaux I et Q sont alors échantillonnés par un convertisseur analogique numérique ADC 701 (par exemple un convertisseur flash, ou à base de modulateur sigma-delta, ou du type SAR pour « Successive Approximation Register » en anglais, ou tout autre équivalent) présent sur la voie de réception correspondante. Dans une chaine de réception classique, un tel convertisseur travaillant à une fréquence d'échantillonnage souvent élevée par rapport à la bande passante du signal utile, le signal délivré par l'ADC est décimé par un étage de décimation 702 (par exemple un filtre à phase linéaire du type CIC pour « Cascaded Integrator-Comb en anglais » ou tout autre équivalent) présent sur chacune des voies I et Q de manière à délivrer chacun M échantillons au rythme de $M/T_s$. Ces M échantillons peuvent être interprétés comme les parties réelles et imaginaires de M échantillons complexes représentatifs d'un signal modulé PPM portant un symbole appartenant à une constellation de Ns symboles.

Les M échantillons complexes sont alors délivrés à un dispositif de démodulation 700 comprenant différents modules.

Plus particulièrement, les M échantillons complexes sont directement délivrés à un module de transformée de Fourier discrète 703 qui délivre N échantillons transformés à un multiplieur complexe 704.

Le multiplieur complexe 704 multiplie alors terme à terme N échantillons délivrés par le module de transformée de Fourier discrète 703 avec N coefficients de modulation délivrés par le dispositif de stockage de coefficients de modulation 707 ainsi qu'avec N coefficients de canal délivrés par l'estimateur de canal 708. Dans des variantes, le dispositif de stockage de coefficients de modulation 707 consiste en une mémoire, en des registres, en un support d'enregistrement, ou en tout autre équivalent. L'estimateur de canal 708 quant à lui estime des coefficients de canal sur la base d'échantillons fournis par le module de transformée de Fourier discrète 703 et du rang d'un symbole reçu correspondant, ce symbole pouvant correspondre à un symbole prédéterminé (e.g. un symbole d'une séquence d'apprentissage) ou à un symbole préalablement décidé (e.g. un symbole de données) par le module de décision 306.

Le multiplieur complexe 704 délivre alors les N échantillons multipliés à un module de génération 705 qui génère alors Ns composantes de décision représentatives du rang k, dans la constellation de Ns symboles, du symbole porté par le signal reçu modulé PPM.

Les Ns composantes sont alors délivrées à un module de décision 706 qui décide le rang k du symbole reçu en fonction de l'indice de la composante de décision qui présente un extremum de valeur parmi les Ns composantes.

On décrit maintenant, en relation avec la **figure 8** les étapes d'un procédé de démodulation d'un signal reçu selon différents modes de réalisation de l'invention. Lors d'une étape E80, une transformée de Fourier discrète directe est appliquée par le module de transformée de Fourier discrète 703 aux M échantillons complexes pris sur une durée Ts et représentatifs d'un symbole reçu (échantillons dont les parties réelles et imaginaires sont délivrées par les étages de décimation 702 présents sur les voies de réception I et Q).

En effet, dans l'hypothèse où la forme d'onde $s_k(t)$ portant le symbole de rang k dans la constellation de Ns symboles a été transmise via un canal de propagation dont la réponse impulsionnelle équivalente en bande de base est $h(t)$, le signal reçu transposé en bande de base tel qu'obtenu en entrée du module de transformée de Fourier discrète 703 s'exprime comme

$$y(t) = (h * s_k)(t) + w(t) = \int_0^{+\infty} h(\tau)s_k(t-\tau)d\tau + w(t)$$

avec $w(t)$ un bruit blanc additif Gaussien et centré.

Les inventeurs ont alors montré qu'en utilisant la décomposition de la forme d'onde $s_k(t)$ en terme des coefficients de modulation $c_i^{(k)}$ telle que donnée par l'équation (Eq-3), le signal reçu peut s'écrire comme

$$y(t) = \sum_{m=-\infty}^{+\infty} c_m^{(k)} \int_0^{+\infty} h(\tau)e^{2j\pi m\frac{t-\tau}{T_s}}d\tau + w(t)$$

$$= \sum_{m=-\infty}^{+\infty} c_m^{(k)}\left(\int_0^{+\infty} h(\tau)e^{-2j\pi m\frac{\tau}{T_s}}d\tau\right)e^{2j\pi m\frac{t}{T_s}} + w(t)$$

$$= \sum_{m=-\infty}^{+\infty} c_m^{(k)}H_m e^{2j\pi m\frac{t}{T_s}} + w(t)$$

où les coefficients $H_m = \int_0^{+\infty} h(\tau)e^{-2j\pi m\frac{\tau}{T_s}}d\tau$ représentent le canal de transmission.

Il apparaît ainsi que la décomposition du signal reçu (qui est à support temporel fini tout comme la forme d'onde $s_k(t)$ ainsi que la réponse impulsionnelle équivalente en bande de base h(t) en pratique) conduit à des coefficients de Fourier s'exprimant, une fois le récepteur synchronisé temporellement, comme

$$\frac{1}{T_s}\int_0^{T_s} y(t)e^{-2j\pi n\frac{t}{T_s}}dt = \frac{1}{T_s}\sum_{m=-\infty}^{+\infty} c_m^{(k)}H_m \int_0^{T_s} e^{2j\pi\frac{(m-n)t}{T_s}}dt + \frac{1}{T_s}\int_0^{T_s} w(t)e^{-2j\pi n\frac{t}{T_s}}dt$$

Or, $\int_0^{T_s} e^{2j\pi \frac{(m-n)t}{T_s}} \mathrm{d}t = T_s \delta(m-n)$, avec $\delta(t)$ la distribution de Dirac. Il apparaît ainsi que

$$\frac{1}{T_s} \int_0^{T_s} y(t) e^{-2j\pi n \frac{t}{T_s}} \mathrm{d}t = H_n c_n^{(k)} + W_n$$

avec $W_n = \frac{1}{T_s} \int_0^{T_s} w(t) e^{-2j\pi n \frac{t}{T_s}} \mathrm{d}t$.

Il est par ailleurs connu de l'homme du métier que les coefficients de Fourier d'un signal donné peuvent être approximés par l'application d'une transformée de Fourier discrète sur ce même signal.

En effet, avec M échantillons de y(t), soit $y(m\Delta T)$ pour m $\in$ [0, M - 1] obtenus en échantillonnant le signal y(t) au rythme $1/\Delta T = M/T_s$, la moyenne obtenue par transformée de Fourier Discrète $\frac{1}{M} \sum_{m=0}^{M-1} y(m\Delta T) e^{-2j\pi \frac{nm}{M}}$ tend vers $\frac{1}{T_s} \int_0^{T_s} y(t) e^{-2j\pi n \frac{t}{T_s}} dt$ quand M tend vers l'infini.

Ainsi, dans un premier mode de réalisation dans lequel le module de transformée de Fourier 703 implémente une transformée de Fourier directe sur M éléments, l'échantillon d'indice n parmi les N échantillons $Y_l$, I variant dans l'ensemble $S_\eta$, délivrés par ce premier module de transformée de Fourier 703 s'exprime alors comme

$$Y_n = H_n c_n^{(k)} + W_n \qquad \text{(Eq-9)}$$

Cependant, il apparaît que la forme d'onde $s_K(t)$ peut alternativement s'exprimer en fonction des coefficients de modulation $c_l^{(k)}$ comme

$$s_k(t) = \sum_{n=-\infty}^{+\infty} c_{-n}^{(k)} e^{-2j\pi n \frac{t}{T_s}} \qquad \text{(Eq-3bis)}$$

lorsque l'on effectue le changement d'indice de n vers —n dans l'équation (Eq-3).

Ainsi, dans un deuxième mode de réalisation, dans lequel le module de transformée de Fourier 703 implémente une transformée de Fourier inverse sur M éléments, il apparaît en utilisant cette décomposition alternative pour la forme d'onde $s_k(t)$ que l'échantillon d'indice n parmi les N échantillons $Y_l$, I variant dans un ensemble $S_\eta$ de cardinal $|S_\eta|$ égal à N, délivrés par ce premier module de transformée de Fourier 703, s'exprime alors comme

$$Y_n = H_n c_{-n}^{(k)} + W_n \qquad \text{(Eq-9bis)}$$

avec $H_n$ et $W_n$ correspondant dans ce cas aux échantillons pris aux fréquences multiples de $M/T_s$ de la transformée de Fourier inverse de h(t) et de w(t) respectivement.

Par ailleurs, il apparaît dans les deux modes de réalisation précités que l'hypothèse Gaussienne pour le bruit additif $w(t)$ reste vraie pour les échantillons $W_l$ obtenus en sortie du module de transformée de Fourier discrète 703, la transformation de Fourier d'une distribution Gaussienne donnant une autre distribution Gaussienne.

Ainsi, une structure de récepteur optimal peut être dérivée au sens du maximum de vraisemblance.

Plus précisément, dans le premier mode de réalisation précité (transformée de Fourier directe), le rang du symbole porté par le signal reçu correspond à l'indice k maximisant la probabilité du symbole émis conditionnellement au signal observé en réception, ou, s'agissant d'une densité Gaussienne, à l'indice k minimisant l'argument de la fonction Gaussienne. Partant de l'équation (Eq-9), il apparaît alors que le rang du symbole porté par le signal reçu correspond à l'indice k maximisant la quantité

$$\sum_{n \in S_\eta} \left| Y_n - H_n c_n^{(k)} \right|^2$$

Cette expression est obtenue en utilisant la propriété de variable aléatoire gaussienne indépendante et identiquement distribuée des échantillons $W_n$, résultants de la projection d'un bruit gaussien sur une base orthonormée.

Ainsi, après développement du module au carré, le rang du symbole correspondant au signal reçu s'exprime en fonction de l'indice k maximisant la quantité

$$\Re \left\{ \sum_{n \in S_\eta} H_n^* c_n^{(k)*} Y_n \right\}$$

Sur la base de l'équation (Eq-5), les coefficients de modulation $c_l^{(k)}$ associés à la forme d'onde portant le symbole de rang k dans la constellation de symboles peuvent s'exprimer en fonction des coefficients de modulation de référence $c_l^{(r)}$ associés à la forme d'onde de référence portant un symbole de référence de rang r. Ainsi, il apparaît que le rang du symbole correspondant au signal reçu s'exprime en fonction de l'indice k maximisant la quantité

$$\Re \left\{ \sum_{n \in S_\eta} Y_n H_n^* c_n^{(r)*} e^{2j\pi \frac{n(k-r)}{N_s}} \right\}$$

Plus précisément, le rang du symbole correspondant au signal reçu s'exprime comme égal à r plus l'indice k maximisant la quantité

$$\Re \left\{ \sum_{n \in S_\eta} Y_n H_n^* c_n^{(r)*} e^{2j\pi \frac{nk}{N_s}} \right\} \qquad \text{(Eq-10)}$$

la somme des deux indices r et k étant prise modulo $N_s$.

De la même manière, reprenant le calcul décrit ci-dessus mais maintenant à partir de l'équation (Eq-9bis) de manière à dériver le récepteur optimal au sens du maximum de vraisemblance dans le cadre du deuxième mode de réalisation précité (transformée de Fourier inverse), et considérant par ailleurs l'expression du coefficient de modulation d'indice -n, $c_{-n}^{(k)}$, obtenue via le changement de variable de n vers -n dans l'équation (Eq-5), il apparaît que le rang du symbole correspondant au signal reçu s'exprime comme étant égal à r plus l'indice k maximisant la quantité

$$\Re \left\{ \sum_{n \in S_\eta} Y_n H_n^* c_{-n}^{(r)*} e^{-2j\pi \frac{nk}{N_s}} \right\} \qquad \text{(Eq-10bis)}$$

la somme des deux indices r et k étant prise modulo $N_s$.

Ainsi, sur la base des équations (Eq-10) et (Eq-10bis) la démodulation du signal reçu au sens du maximum de vraisemblance est obtenue en mettant en œuvre les étapes décrites ci-après dans les deux modes de réalisation précités.

Plus particulièrement, lors d'une étape d'obtention E81, $N = |S_\eta|$ coefficients de modulation de référence $c_l^{(r)}$ délivrés par le dispositif de stockage de coefficients de modulation 707 sont obtenus.

Les N coefficients de modulation de référence $c_l^{(r)}$ sont ici obtenus selon la technique décrite ci-dessus en relation avec l'étape E40 illustrée sur la figure 4. Notamment, dans un mode de réalisation les N coefficients de modulation de référence résultent de la décomposition en série de Fourier de la forme d'onde de référence, délivrant un ensemble de coefficients initiaux, et de la sélection d'un ensemble de N coefficients de modulation de référence parmi les coefficients initiaux. Dans une variante, la sélection de N coefficients de modulation de référence se fait au moins en fonction d'un critère de minimisation d'une perte d'énergie. Ainsi, la distorsion de la forme d'onde de référence est minimale et la perte d'information associée également.

Puis, dans le premier mode de réalisation précité (transformée de Fourier directe), lors d'une étape de détermination E82, le module de génération 705 détermine alors $N_s \leq N$ composantes de décision $D_l$, l un entier de 0 à Ns-1. Chacune des Ns composantes de décision $D_l$ correspondant alors à la partie réelle d'un échantillon obtenu en sortie d'un transformée de Fourier discrète inverse appliquée au vecteur constitué par N échantillons délivrés par le multiplieur complexe 704 (i.e. $D_l = \Re\left\{\sum_{n \in S_\eta} Y_n H_n^* c_n^{(r)^*} e^{2j\pi\frac{nl}{N_s}}\right\}$ d'après l'équation (Eq-10)). Plus particulièrement, l'échantillon d'indice n délivré par le multiplieur complexe 704 s'exprime comme $Y_n H_n^* c_n^{(r)^*}$, avec $H_n$ le coefficient de canal d'indice n parmi les N coefficients de canal $H_l$ délivrés par l'estimateur de canal 708 lors de la mise en œuvre d'une étape E85 décrite ci-dessous, et $c_n^{(r)}$ le coefficient de modulation de référence d'indice n délivré par le dispositif de stockage de coefficients de modulation 707 lors de la mise en œuvre de l'étape d'obtention E81.

Lors d'une étape de décision E83, l'estimé $\hat{k}$ du rang du symbole porté par le signal reçu s'exprime alors en fonction de la composante de décision, d'indice k, notée composante $D_k$, présentant un extremum de valeur parmi les Ns composantes de décision $D_l$ déterminées lors de l'étape E82. Plus précisément, l'estimé $\hat{k}$ est décidé comme égal à

$$\hat{k} = r + \arg\max_k\{D_k\}\ [Ns]$$

où [.] désigne la fonction modulo.

Il apparaît ainsi que le récepteur optimal au sens du maximum de vraisemblance est ici basé sur l'emploi de deux transformations de Fourier discrètes pouvant être implémentées sous forme de transformées de Fourier rapide. En effet, il est commode de choisir en pratique M=N, et N un multiple de Ns, tous deux choisis préférentiellement comme des puissances de deux. Ainsi, Les traitements selon la technique décrite restent proportionnels à $N_s \ln(N_s)$ opérations alors qu'ils sont proportionnels à $N_s^2$ lorsque les Ns corrélations requises par le récepteur optimal au sens du maximum de vraisemblance sont implémentées selon les techniques connues.

De la même manière, dans le deuxième mode de réalisation précité (transformée de Fourier inverse), lors de l'étape de détermination E82, le module de génération 705 détermine alors les Ns composantes de décision $D_l$, chacune d'elles correspondant alors à la partie réelle d'un échantillon obtenu en sortie d'une transformée de Fourier discrète directe appliquée au vecteur constitué par les N échantillons $Y_n H_n^* c_{-n}^{(r)^*}$ délivrés par le multiplieur complexe 704 (i.e. $D_l = \Re\left\{\sum_{n \in S_\eta} Y_n H_n^* c_n^{(r)^*} e^{-2j\pi\frac{nl}{N_s}}\right\}$ d'après l'équation (Eq-10bis)).

Lors d'une étape de décision E83, l'estimé $\hat{k}$ du rang du symbole porté par le signal reçu est décidé comme égal à

$$\hat{k} = r + \arg\max_k\{D_k\}\ [Ns]$$

où [.] désigne la fonction modulo.

Il apparaît par ailleurs que dans les modes de réalisation décrits ci-dessus, la mise en œuvre des étapes E81, E82 et E83 suppose la connaissance des N coefficients de canal $H_l$.

Lors d'une étape E85, les coefficients de canal $H_l$ sont obtenus.

Dans un mode de réalisation, le procédé de démodulation d'un signal modulé PPM décrit est optimisé pour un canal de transmission se réduisant à un bruit additif blanc et Gaussien, ou AWGN (pour « Additif White Gaussian Noise » en anglais). Dans ce cas, la réponse impulsionnelle du canal h(t) se réduit à une seule distribution de Dirac, ce qui conduit à considérer les $N = |S_\eta| \geq N_s$ coefficients de canal $H_l$ égaux à 1 (ces coefficients de canal correspondant à une transformée de Fourier de la réponse impulsionnelle du canal).

Dans un autre mode de réalisation, l'étape E85 d'obtention met en œuvre une sous-étape d'estimation E85₁ des coefficients de canal par l'estimateur de canal 708 sur la base des $N = |S_\eta| \geq N_s$ échantillons $Y_l$ délivrés par le module de transformée de Fourier discrète 703 et du rang d'un symbole reçu correspondant, ce symbole pouvant correspondre à un symbole prédéterminé (e.g. un préambule ou un symbole d'une séquence d'apprentissage) ou à un symbole préalablement décidé (e.g. un symbole de données) par le module de décision 306 lors d'une exécution préalable de l'étape E83.

Plus particulièrement, les coefficients de canal $H_l$ sont déterminés par la mise en œuvre d'une technique connue de l'homme du métier d'estimation du canal dans le domaine fréquentiel telle que celles décrites par exemple dans les documents « M. K. Ozdemir and H. Arslan, "Channel estimation for wireless ofdm systems," in IEEE Communications Surveys & Tutorials, vol. 9, no. 2, pp. 18-48*, Second Quarter 2007 »,* ou « Srishtansh Pathak and Himanshu Sharma, "Channel Estimation in OFDM Systems", in International Journal of Advanced Research in Computer Science and Software Engineering, Volume 3, Issue 3, March 2013, ISSN: 2277 128X **».**

Dans une variante, r est nul est les coefficients de modulation $c_n^{(r)}$ de la forme d'onde de référence $s_r(t)$ utilisée pour la mise en œuvre des étapes du procédé de démodulation d'un signal modulé PPM décrit ci-dessus (dans l'un quelconque des différents modes de réalisation) correspondent aux coefficients de modulation $c_n^{(0)}$ de la forme d'onde de base $s_0(t)$.

Dans une autre variante Ns ainsi que N et M s'expriment comme une puissance de deux. Ainsi, les transformée de Fourier discrète implémentées respectivement dans le module de transformée de Fourier discrète 703 et dans le module de génération 705 peuvent être implémentées comme des transformées de Fourier rapide selon un algorithme particulièrement efficace.

Dans encore une autre variante, la forme d'onde de base utilisée a une fréquence instantanée variant linéairement entre une première fréquence instantanée f0 et une deuxième fréquence instantanée f1 pendant la durée Ts, et la fréquence instantanée f1 est choisie telle que $f_1 = -f_0$, comme par exemple un signal chirp brut utilisé dans la technologie LoRa® et décrit ci-dessus en relation avec les figures 2a et 2b. Les coefficients de modulation $c_n^{(0)} = c_n$ sont alors donnés par l'équation (Eq-6).

On notera que lors de la démodulation RF, il est toujours possible de choisir une fréquence porteuse de façon à ce que $f_1 = -f_0$.

La **figure 9** présente un exemple de structure de dispositif de démodulation de signaux modulés PPM permettant la mise en œuvre d'un procédé de démodulation décrit en relation avec la figure 8 selon différents modes de réalisation de l'invention.

Le dispositif de démodulation de signaux modulés PPM 700 comprend une mémoire vive 903 (par exemple une mémoire RAM), une unité de traitement 902 équipée par exemple d'un processeur, et pilotée par un programme d'ordinateur stocké dans une mémoire morte 901 (par exemple une mémoire ROM ou un disque dur). A l'initialisation, les instructions de code du programme d'ordinateur sont par exemple chargées dans la mémoire vive 903 avant d'être exécutées par le processeur de l'unité de traitement 902.

Cette figure 9 illustre seulement une manière particulière, parmi plusieurs possibles, de réaliser le dispositif de démodulation de signaux modulés PPM 700 afin qu'il effectue certaines étapes du procédé détaillé ci-dessus en relation avec la figure 8 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif de démodulation de signaux modulés PPM 700 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de génération d'un signal modulé en position d'impulsions,
   ledit signal modulé comprenant une succession temporelle de formes d'onde parmi Ns formes d'ondes,
   une s-ème forme d'onde parmi lesdites Ns formes d'ondes étant associée à un symbole de rang k d'une constellation de Ns symboles, k un entier de 0 à Ns-1,
   ladite s-ème forme d'onde résultant d'une permutation circulaire du motif de variation d'une forme d'onde de base sur une durée Ts, obtenue par un décalage temporel de k fois une durée temporelle élémentaire Tc, telle que Ns*Tc=Ts,
   **caractérisé en ce qu'**il comprend les étapes suivantes, exécutées pour un symbole de rang k de ladite constellation de Ns symboles :

• obtention (E40) d'un ensemble de N coefficients de modulation $c_l^{(k)}$, l étant un entier variant dans un ensemble $S_\eta$ de taille N,

un coefficient de modulation d'indice n parmi lesdits N coefficients de modulation, noté $c_n^{(k)}$, s'exprimant comme le produit d'un coefficient de modulation de référence d'indice n, noté $c_n^{(r)}$, avec un terme de déphasage dont l'argument est proportionnel à n,

ledit coefficient de modulation de référence $c_n^{(r)}$ étant issu de la décomposition en série de Fourier d'une forme d'onde de référence, parmi lesdites Ns formes d'ondes, associée à un symbole de rang r ;
• génération (E41) de M échantillons temporels d'une k-ème forme d'onde par transformation de Fourier directe ou inverse dudit ensemble de N coefficients de modulation $c_l^{(k)}$.

2. Procédé de génération selon la revendication 1,
   **caractérisé en ce que** l'étape d'obtention (E40) dudit ensemble de N coefficients de modulation met en œuvre, pour ledit coefficient de modulation $c_n^{(k)}$ dudit ensemble, les sous-étapes suivantes :

   • lecture (E401), dans un premier dispositif de stockage, dudit coefficient de modulation de référence $c_n^{(r)}$ issu de la décomposition en série de Fourier de ladite forme d'onde de base,
   • multiplication (E402) dudit coefficient de modulation de référence $c_n^{(r)}$ par ledit terme de déphasage dont l'argument est proportionnel à n, ladite multiplication délivrant ledit coefficient de modulation $c_n^{(k)}$.

3. Procédé de génération selon la revendication 1,
   **caractérisé en ce que** l'étape d'obtention (E40) dudit ensemble de N coefficients de modulation met en œuvre une étape de lecture (E401), dans un deuxième dispositif de stockage, desdits coefficients de modulation $c_l^{(k)}$ préalablement calculés.

4. Procédé de génération selon l'une quelconque des revendications 1 à 3,
   **caractérisé en ce que** lesdits coefficients de modulation de référence $c_l^{(r)}$ sont obtenus en mettant en œuvre les étapes suivantes :

   • décomposition en série de Fourier de ladite forme d'onde de référence, délivrant un ensemble de coefficients initiaux,
   • sélection d'un ensemble de N coefficients de modulation de référence parmi lesdits coefficients initiaux, au moins en fonction d'un critère de minimisation d'une perte d'énergie.

5. Procédé de génération selon l'une quelconque des revendications 1 à 4,
   **caractérisé en ce que** ledit terme de déphasage est proportionnel à :

   • $e^{-2j\pi n\frac{k}{N_S}}$ lorsque ladite transformation de Fourier est une transformation de Fourier inverse, ou

   • $e^{+2j\pi n\frac{k}{N_S}}$ lorsque ladite transformation de Fourier est une transformation de Fourier directe.

6. Procédé de génération selon l'une quelconque des revendications 1 à 5,

   **caractérisé en ce que** ledit ensemble de N coefficients de modulation $c_l^{(k)}$ forme un vecteur de modulation et **en ce que**, si le nombre M d'échantillons temporels est supérieur au nombre N de coefficients de modulation $c_l^{(k)}$,

(*M - N*) éléments nuls sont ajoutées audit vecteur de modulation.

7. Procédé selon l'une quelconque des revendications 1 à 6,
**caractérisé en ce que** ladite forme d'onde de base a une fréquence instantanée variant linéairement entre une première fréquence instantanée f0 et une deuxième fréquence instantanée f1 pendant la durée Ts, la deuxième fréquence instantanée f1 étant choisie telle que $f_1 = -f_0$,

**et en ce que** ledit coefficient de modulation de référence $c_n^{(r)}$ est donné par $c_n^{(r)} =$

$$2(-1)^n(-j)^{\frac{N_S}{4}} e^{-2j\pi n \frac{r}{N_S}} \int_0^{\frac{1}{2}} e^{j\pi N_S v^2} \cos(2\pi n v)\, \mathrm{d}v.$$

8. Procédé de démodulation d'un signal reçu résultant d'une modulation d'un signal en position d'impulsions et de la transmission du signal modulé dans un canal de transmission,
ledit signal modulé comprenant une succession temporelle de formes d'onde parmi Ns formes d'ondes,
une k-ème forme d'onde parmi lesdites Ns formes d'ondes étant associée à un symbole de rang k d'une constellation de Ns symboles, k un entier de 0 à Ns-1,
ladite k-ème forme d'onde résultant d'une permutation circulaire du motif de variation d'une forme d'onde de base sur une durée Ts, obtenue par un décalage temporel de k fois une durée temporelle élémentaire Tc, telle que Ns*Tc=Ts,
**caractérisé en ce qu'**il comprend les étapes suivantes, exécutées pour M échantillons représentatifs d'une forme d'onde comprise dans ledit signal modulé :

• transformation de Fourier (E80) directe ou inverse appliquée auxdits M échantillons dudit signal reçu et délivrant N échantillons transformés $Y_l$, l un entier variant dans un ensemble $S_\eta$ de taille N ;

• obtention (E81) d'un ensemble de N coefficients de modulation $c_l^{(k)}$, l étant un entier variant dans l'ensemble $S_\eta$,

un coefficient de modulation d'indice n parmi lesdits N coefficients de modulation, noté $c_n^{(k)}$, s'exprimant comme

le produit d'un coefficient de modulation de référence d'indice n, noté $c_n^{(r)}$, avec un terme de déphasage dont l'argument est proportionnel à n,

ledit coefficient de modulation de référence $c_n^{(r)}$ étant issu de la décomposition en série de Fourier d'une forme d'onde de référence, parmi lesdites Ns formes d'ondes, associée à un symbole de rang r ;
• détermination (E82) de Ns composantes de décision, à partir desdits N échantillons transformés et des N coefficients de modulation obtenus,
une composante de décision d'indice l, notée composante $D_l$, s'exprimant comme fonction d'une transformée de Fourier directe ou inverse de N termes, avec l un entier de 0 à Ns-1,
un terme d'indice n parmi lesdits N termes, n un entier variant dans l'ensemble $S_\eta$, étant fonction d'un produit de l'échantillon transformé $Y_n$ avec le coefficient de modulation de référence $c_n^{(r)}$ obtenu ou avec le complexe conjugué dudit coefficient de modulation de référence obtenu ;
• décision (E83) du rang $\hat{k}$ du symbole porté par ladite forme d'onde associée auxdits M échantillons, à partir de la composante de décision présentant un extremum de valeur parmi lesdites Ns composantes de décision, d'indice k, notée composante $D_k$.

9. Procédé de démodulation selon la revendication 8,

**caractérisé en ce que** lesdits coefficients de modulation de référence $c_l^{(r)}$ sont obtenus en mettant en œuvre les étapes suivantes :

• décomposition en série de Fourier de ladite forme d'onde de référence, délivrant un ensemble de coefficients initiaux,
• sélection d'un ensemble de N coefficients de modulation de référence parmi lesdits coefficients initiaux, au moins en fonction d'un critère de minimisation d'une perte d'énergie.

10. Procédé de démodulation selon l'une quelconque des revendications 8 ou 9,

**caractérisé en ce que** la transformée de Fourier appliquée auxdits M échantillons dudit signal reçu est directe,
**en ce que** le procédé comprend une étape d'obtention (E85) de N paramètres représentatifs du canal de transmission,
**et en ce que** ladite k-ème composante $D_k$ est exprimée sous une forme proportionnelle à la partie réelle de

$\sum_{n \in S_n} Y_n H_n^* c_n^{(r)*} e^{2j\pi \frac{nk}{N_s}}$, ou de son complexe conjugué,

avec $H_n$, n un entier variant dans l'ensemble $S_n$, un paramètre représentatif du canal de transmission, obtenu en appliquant une transformée de Fourier directe à N échantillons temporels de la réponse impulsionnelle dudit canal.

11. Procédé de démodulation selon l'une quelconque des revendications 8 ou 9,
**caractérisé en ce que** la transformée de Fourier appliquée auxdits M échantillons dudit signal reçu est inverse,
**en ce que** le procédé comprend une étape d'obtention (E85) de N paramètres représentatifs du canal de transmission,
**et en ce que** ladite k-ème composante $D_k$ est exprimée sous une forme proportionnelle à la partie réelle de

$\sum_{n \in S_n} Y_n H_n^* c_{-n}^{(r)*} e^{-2j\pi \frac{nk}{N_s}}$, ou de son complexe conjugué,

avec $H_n$, n un entier variant dans l'ensemble $S_n$, un paramètre représentatif du canal de transmission, obtenu en appliquant une transformée de Fourier inverse à Ns échantillons temporels de la réponse impulsionnelle dudit canal.

12. Procédé selon l'une quelconque des revendications 8 à 11,
**caractérisé en ce que** ladite forme d'onde de base a une fréquence instantanée variant linéairement entre une première fréquence instantanée f0 et une deuxième fréquence instantanée f1 pendant la durée Ts, la deuxième fréquence instantanée f1 étant choisie telle que $f_1 = -f0$,

**et en ce que** ledit coefficient de modulation de référence $c_n^{(r)}$ est donné par $c_n^{(r)} = 2(-1)^n (-j)^{\frac{N_s}{4}} e^{-2j\pi n \frac{r}{N_s}} \int_0^{\frac{1}{2}} e^{j\pi N_s v^2} \cos(2\pi n v)\, dv$.

13. Produit programme d'ordinateur, comprenant des instructions de code de programme pour la mise en œuvre d'un procédé selon l'une quelconque des revendications 1 à 12, lorsque ledit programme est exécuté sur un ordinateur.

14. Dispositif de génération (300, 300') d'un signal modulé en position d'impulsions, ledit signal modulé comprenant une succession temporelle de formes d'onde parmi Ns formes d'ondes,
une k-ème forme d'onde parmi lesdites Ns formes d'ondes étant associée à un symbole de rang k d'une constellation de Ns symboles, k un entier de 0 à Ns-1,
ladite k-ème forme d'onde résultant d'une permutation circulaire du motif de variation d'une forme d'onde de base sur une durée Ts, obtenue par un décalage temporel de k fois une durée temporelle élémentaire Tc, telle que Ns*Tc=Ts,
**caractérisé en ce qu'**il comprend une machine de calcul reprogrammable (602, 612) ou une machine de calcul dédiée, apte à et configurée pour :

- obtenir un ensemble de N coefficients de modulation $c_l^{(k)}$, l étant un entier variant dans un ensemble $S_n$, un coefficient de modulation d'indice n parmi lesdits N coefficients de modulation, noté $c_n^{(k)}$, s'exprimant comme le produit d'un coefficient de modulation de référence d'indice n, noté $c_n^{(r)}$, avec un terme de déphasage dont l'argument est proportionnel à n, ledit coefficient de modulation de référence $c_n^{(r)}$ étant issu de la décomposition en série de Fourier d'une forme d'onde de référence, parmi lesdites Ns formes d'ondes, associée à un symbole de rang r ;
- générer M échantillons temporels d'une k-ème forme d'onde par transformation de Fourier directe ou inverse dudit ensemble de N coefficients de modulation $c_l^{(k)}$.

15. Dispositif de démodulation d'un signal reçu résultant d'une modulation d'un signal en position d'impulsions et de la transmission du signal modulé dans un canal de transmission,

ledit signal modulé comprenant une succession temporelle de formes d'onde parmi Ns formes d'ondes,

une k-ème forme d'onde parmi lesdites Ns formes d'ondes étant associée à un symbole de rang k d'une constellation de Ns symboles, k un entier de 0 à Ns-1,

ladite k-ème forme d'onde résultant d'une permutation circulaire du motif de variation d'une forme d'onde de base sur une durée Ts, obtenue par un décalage temporel de s fois une durée temporelle élémentaire Tc, telle que Ns*Tc=Ts,

**caractérisé en ce qu'**il comprend une machine de calcul reprogrammable (902) ou une machine de calcul dédiée, apte à et configurée pour :

• appliquer une transformation de Fourier directe ou inverse auxdits M échantillons dudit signal reçu et délivrer N échantillons transformés $Y_l$, l un entier variant dans un ensemble $S_\eta$ de taille N ;

• obtenir un ensemble de N coefficients de modulation $c_l^{(k)}$, l étant un entier variant dans l'ensemble $S_\eta$,

un coefficient de modulation d'indice n parmi lesdits N coefficients de modulation, noté $c_n^{(k)}$, s'exprimant comme

le produit d'un coefficient de modulation de référence d'indice n, noté $c_n^{(r)}$, avec un terme de déphasage dont l'argument est proportionnel à n,

ledit coefficient de modulation de référence $c_n^{(r)}$ étant issu de la décomposition en série de Fourier d'une forme d'onde de référence, parmi lesdites Ns formes d'ondes, associée à un symbole de rang r ;

• déterminer Ns composantes de décision, à partir desdits N échantillons transformés,

une composante de décision d'indice l, notée composante $D_l$, s'exprimant comme fonction d'une transformée de Fourier directe ou inverse de N termes, avec l un entier de 0 à Ns-1,

un terme d'indice n parmi lesdits N termes, n un entier variant dans l'ensemble $S_\eta$, étant fonction d'un produit d'un échantillon transformé $Y_n$ avec un coefficient de modulation de référence $c_n^{(r)}$ obtenu ou avec le complexe conjugué dudit coefficient de modulation de référence obtenu ;

• décider du rang $\hat{k}$ du symbole porté par ladite forme d'onde associée auxdits M échantillons, à partir de la composante de décision présentant un extremum de valeur parmi lesdites Ns composantes de décision, d'indice k, notée composante $D_k$.

## Patentansprüche

1. Verfahren zur Erzeugung eines pulspositionsmodulierten Signals, wobei das modulierte Signal eine zeitliche Abfolge von Wellenformen unter Ns Wellenformen aufweist,

eine s-te Wellenform unter den Ns Wellenformen einem Symbol vom Rang k einer Konstellation von Ns Symbolen zugeordnet ist, wobei k eine ganze Zahl von 0 bis Ns-1 ist, die s-te Wellenform sich aus einer Kreispermutation des Variationsmusters einer Basiswellenform über eine Dauer Ts ergibt, welche sich durch eine zeitliche Verschiebung von k Mal einer elementaren Zeitdauer Tc ergibt, bei der Ns*Tc=Ts,

**dadurch gekennzeichnet, dass** es die folgenden Schritte umfasst, die für ein Symbol vom Rang k der Konstellation von Ns Symbolen durchgeführt werden:

• Erzielung (E40) einer Menge von N Modulationskoeffizienten $c_l^{(k)}$, wobei l eine ganze Zahl ist, die in einer Menge $S_\eta$ der Größe N variiert,

wobei ein als $c_n^{(k)}$ bezeichneter Modulationskoeffizient mit dem Index n unter den N Modulationskoeffizienten als Produkt eines als $c_n^{(r)}$ bezeichneten Referenzmodulationskoeffizienten mit dem Index n mit einem Phasenverschiebungsterm angegeben wird, dessen Argument proportional zu n ist,

wobei der Referenzmodulationskoeffizient $c_n^{(r)}$ sich aus der Fourier-Reihenzerlegung einer Referenzwellenform unter den Ns Wellenformen ergibt, die einem Symbol mit Rang r zugeordnet ist;

• Erzeugung (E41) von M Zeitabtastwerten einer k-ten Wellenform durch direkte oder inverse Fourier-Transformation der Menge von N Modulationskoeffizienten $c_l^{(k)}$.

2. Erzeugungsverfahren nach Anspruch 1,
   **dadurch gekennzeichnet, dass** der Schritt zur Erzielung (E40) der Menge von N Modulationskoeffizienten für den Modulationskoeffizienten $c_n^{(k)}$ der Menge die folgenden Unterschritte umsetzt:

   • Lesen (E401) des sich aus der Fourier-Reihenzerlegung der Basiswellenform ergebenden Referenzmodulationskoeffizienten $c_n^{(r)}$ in einer ersten Speichervorrichtung,

   • Multiplizieren (E402) des Referenzmodulationskoeffizienten $c_n^{(r)}$ mit dem Phasenverschiebungsterm, dessen Argument proportional zu n ist, wobei diese Multiplikation den Modulationskoeffizienten $c_n^{(k)}$ ergibt.

3. Erzeugungsverfahren nach Anspruch 1,
   **dadurch gekennzeichnet, dass** der Schritt der Erzielung (E40) der Menge von N Modulationskoeffizienten einen Schritt des Lesens (E401) der zuvor berechneten Modulationskoeffizienten $c_l^{(k)}$ in einer zweiten Speichervorrichtung umsetzt.

4. Erzeugungsverfahren nach einem der Ansprüche 1 bis 3,

   **dadurch gekennzeichnet, dass** die Referenzmodulationskoeffizienten $c_l^{(r)}$ durch Umsetzung der folgenden Schritte erzielt werden:

   • Fourier-Reihenzerlegung der Referenzwellenform, woraus sich eine Menge von Anfangskoeffizienten ergeben,
   • Auswahl einer Menge von N Referenzmodulationskoeffizienten unter den Anfangskoeffizienten mindestens in Abhängigkeit von einem Kriterium für die Minimisierung eines Energieverlustes.

5. Erzeugungsverfahren nach einem der Ansprüche 1 bis 4,
   **dadurch gekennzeichnet, dass** der Phasenverschiebungsterm proportional ist zu:

   • $e^{-2j\pi n \frac{k}{N_s}}$ wenn die Fourier-Transformation eine inverse Fourier-Transformation ist oder

   • $e^{+2j\pi n \frac{k}{N_s}}$ wenn die Fourier-Transformation eine direkte Fourier-Transformation ist.

6. Erzeugungsverfahren nach einem der Ansprüche 1 bis 5,

   **dadurch gekennzeichnet, dass** die Menge von N Modulationskoeffizienten $c_l^{(k)}$ einen Modulationsvektor bildet und dass, wenn die Anzahl M von Zeitabtastwerten größer ist als die Anzahl N von Modulationskoeffizienten $c_l^{(k)}$, (M - N) Nullelemente dem Modulationsvektor hinzugefügt werden.

7. Verfahren nach einem der Ansprüche 1 bis 6,
   **dadurch gekennzeichnet, dass** die Basiswellenform eine momentane Frequenz aufweist,
   die linear zwischen einer ersten momentanen Frequenz f0 und einer zweiten momentanen Frequenz f1 während der Dauer Ts variiert, wobei die zweite momentane Frequenz f1 derart gewählt wird, dass $f_1 = -f_0$,

   **und dass** der Referenzmodulationskoeffizient $c_n^{(r)}$ sich zu $c_n^{(r)} =$
   $2(-1)^n(-j)^{\frac{N_s}{4}} e^{-2j\pi n \frac{r}{N_s}} \int_0^{\frac{1}{2}} e^{j\pi N_s v^2} \cos(2\pi n v)\, dv$ ergibt.

8. Verfahren für die Demodulation eines empfangenen Signals, das sich aus einer Pulspositions-Modulation eines Signals und der Übertragung des modulierten Signals über einen Übertragungskanal ergibt, wobei das modulierte Signal eine zeitliche Abfolge von Wellenformen unter Ns Wellenformen aufweist,

eine k-te Wellenform unter den Ns Wellenformen einem Symbol vom Rang k einer Konstellation von Ns Symbolen zugeordnet ist, wobei k eine ganze Zahl von 0 bis Ns-1 ist, die k-te Wellenform sich aus einer Kreispermutation des Variationsmusters einer Basiswellenform über eine Dauer Ts ergibt, welche sich durch eine zeitliche Verschiebung von k Mal einer elementaren Zeitdauer Tc ergibt, bei der Ns*Tc=Ts,

**dadurch gekennzeichnet, dass** es die folgenden Schritte umfasst, die für M Abtastwerte durchgeführt werden, welche für eine in dem modulierten Signal enthaltene Wellenform repräsentativ sind:

• direkte oder inverse Fourier-Transformation (E80), welche auf die M Abtastwerte des empfangenen Signals angewendet wird und N transformierte Abtastwerte $Y_l$ liefert, wobei l eine ganze Zahl ist, die in einer Menge $S_\eta$ der Größe N variiert;

• Erzielung (E81) einer Menge von N Modulationskoeffizienten $c_l^{(k)}$, wobei l eine ganze Zahl ist, die in der Menge $S_\eta$ variiert,

wobei ein als $c_n^{(k)}$ bezeichneter Modulationskoeffizient mit dem Index n unter den N Modulationskoeffizienten als Produkt eines als $c_n^{(r)}$ bezeichneten Referenzmodulationskoeffizienten mit dem Index n mit einem Phasenverschiebungsterm angegeben wird, dessen Argument proportional zu n ist,

wobei der Referenzmodulationskoeffizient $c_n^{(r)}$ sich aus der Fourier-Reihenzerlegung einer Referenzwellenform unter den Ns Wellenformen ergibt, die einem Symbol mit Rang r zugeordnet ist;

• Ermittlung (E82) von Ns Entscheidungskomponenten ausgehend von den N transformierten Abtastwerten und von den N erzielten Modulationskoeffizienten, wobei eine als Komponente $D_l$ bezeichnete Entscheidungskomponente mit dem Index l als eine Funktion einer direkten oder inversen Fourier-Transformierten von N Termen angegeben wird, wobei l eine ganze Zahl von 0 bis Ns-1 ist, wobei ein Term mit dem Index n unter den N Termen, wobei n eine ganze Zahl ist, die in der Menge $S\eta$ variiert, von einem Produkt des transformierten Abtastwerts $Y_n$ mit dem erzielten Referenzmodulationskoeffizient $c_n^{(r)}$ oder mit dem konjugierten Komplex des erzielten Referenzmodulationskoeffizienten abhängt;

• Entscheidung (E83) über den Rang $\hat{k}$ des von der Wellenform übertragenen Symbols, die den M Abtastwerten zugeordnet ist, ausgehend von der als Komponente $D_k$ bezeichneten Entscheidungskomponente mit dem Index k, die einen Extremwert unter den Ns Entscheidungskomponenten darstellt.

**9.** Demodulationsverfahren nach Anspruch 8,

**dadurch gekennzeichnet, dass** die Referenzmodulationskoeffizienten $c_l^{(r)}$ durch die Umsetzung folgender Schritte erzielt werden:

• Fourier-Reihenzerlegung der Referenzwellenform, woraus sich eine Menge von Anfangskoeffizienten ergibt,
• Auswahl einer Menge von N Referenzmodulationskoeffizienten unter den Anfangskoeffizienten mindestens in Abhängigkeit von einem Kriterium für eine Minimierung eines Energieverlustes.

**10.** Demodulationsverfahren nach einem der Ansprüche 8 oder 9,
**dadurch gekennzeichnet, dass** die auf die M Abtastwerte des empfangenen Signals angewendete Fourier-Transformierte direkt ist,
**dass** das Verfahren einen Schritt der Erzielung (E85) von N für den Übertragungskanal repräsentativen Parameter umfasst und
**dass** die k-te Komponente $D_k$ in einer Form angegeben ist, die proportional zum Realteil von

$$\sum_{n \in S_n} Y_n H_n^* c_n^{(r)*} e^{2j\pi\frac{nk}{N_s}}$$ oder des konjugierten Komplexes ist,

mit $H_n$, wobei n eine in der Menge $S_\eta$ variierende ganze Zahl ist, ein für den Übertragungskanal repräsentativer Parameter, der sich aus der Anwendung einer direkten Fourier-Transformierten auf N Zeitabtastwerte der Impulsantwort des Kanals ergibt.

**11.** Demodulationsverfahren nach einem der Ansprüche 8 oder 9,
**dadurch gekennzeichnet, dass** die auf die M Abtastwerte des empfangenen Signals angewendete Fourier-Transformierte invers ist,

**dass** das Verfahren einen Schritt zur Erzielung (E85) von N für den Übertragungskanal repräsentativen Parameter umfasst und

**dass** die k-te Komponente $D_k$ in einer Form angegeben ist, die proportional zum Realteil von

$$\sum_{n \in S_\eta} Y_n H_n^* c_{-n}^{(r)*} e^{-2j\pi \frac{nk}{N_s}}$$ oder des konjugierten Komplexes ist,

mit $H_n$, wobei n eine in der Menge $S_\eta$ variierende ganze Zahl ist, ein für den Übertragungskanal repräsentativer Parameter, der sich aus der Anwendung einer inversen Fourier-Transformierten auf Ns Zeitabtastwerte der Impulsantwort des Kanals ergibt.

12. Verfahren nach einem der Ansprüche 8 bis 11,
**dadurch gekennzeichnet, dass** die Basiswellenform eine momentane Frequenz aufweist, die linear zwischen einer ersten momentanen Frequenz f0 und einer zweiten momentanen Frequenz f1 während der Dauer Ts variiert, wobei die zweite momentane Frequenz f1 derart gewählt wird, dass $f_1 = -f_0$, und

**dass** der Referenzmodulationskoeffizient $c_n^{(r)}$ sich zu $c_n^{(r)} =$

$$2(-1)^n(-j)^{\frac{N_s}{4}} e^{-2j\pi n \frac{r}{N_s}} \int_0^{\frac{1}{2}} e^{j\pi N_s v^2} \cos(2\pi n v) \, dv$$ ergibt.

13. Computerprogrammprodukt mit Programmcodebefehlen für die Umsetzung eines Verfahrens nach einem der Ansprüche 1 bis 12, wenn das Programm auf einem Computer ausgeführt wird.

14. Vorrichtung für die Erzeugung (300, 300') eines pulspositionsmodulierten Signals, wobei
das modulierte Signal eine zeitliche Abfolge von Wellenformen unter Ns Wellenformen aufweist,
eine k-te Wellenform unter den Ns Wellenformen einem Symbol vom Rang k einer Konstellation von Ns Symbolen zugeordnet ist, wobei k eine ganze Zahl von 0 bis Ns-1 ist, die k-te Wellenform sich aus einer Kreispermutation des Variationsmusters einer Basiswellenform über eine Dauer Ts ergibt, welche sich durch eine zeitliche Verschiebung von k Mal einer elementaren Zeitdauer Tc ergibt, bei der Ns*Tc=Ts,
**dadurch gekennzeichnet, dass** sie eine umprogrammierbare Rechenmaschine (602, 612) oder eine dedizierte Rechenmaschine umfasst, die dazu geeignet und dafür eingerichtet ist, um

• eine Menge von N Modulationskoeffizienten $c_l^{(k)}$ zu erzielen, wobei l eine ganze Zahl ist, die in einer Menge $S_\eta$ variiert,

wobei ein als $c_n^{(k)}$ bezeichneter Modulationskoeffizient mit dem Index n unter den N Modulationskoeffizienten als Produkt eines als $c_n^{(r)}$ bezeichneten Referenzmodulationskoeffizienten mit dem Index n mit einem Phasenverschiebungsterm angegeben wird, dessen Argument proportional zu n ist,

wobei der Referenzmodulationskoeffizient $c_n^{(r)}$ sich aus der Fourier-Reihenzerlegung einer Referenzwellenform unter den Ns Wellenformen ergibt, die einem Symbol mit Rang r zugeordnet ist;
• M Zeitabtastwerte einer k-ten Wellenform durch direkte oder inverse Fourier-Transformation der Menge von N Modulationskoeffizienten $c_l^{(k)}$ zu erzeugen.

15. Vorrichtung für die Demodulation eines empfangenen Signals, das sich aus einer Pulspositions-Modulation eines Signals und der Übertragung des modulierten Signals über einen Übertragungskanal ergibt, wobei
das modulierte Signal eine zeitliche Abfolge von Wellenformen unter Ns Wellenformen aufweist,
eine k-te Wellenform unter den Ns Wellenformen einem Symbol vom Rang k einer Konstellation von Ns Symbolen zugeordnet ist, wobei k eine ganze Zahl von 0 bis Ns-1 ist, die k-te Wellenform sich aus einer Kreispermutation des Variationsmusters einer Basiswellenform über eine Dauer Ts ergibt, welche sich durch eine zeitliche Verschiebung von k Mal einer elementaren Zeitdauer Tc ergibt, bei der Ns*Tc=Ts,
**dadurch gekennzeichnet, dass** sie eine umprogrammierbare Rechenmaschine (902) oder
eine dedizierte Rechenmaschine umfasst, die dazu geeignet und dafür eingerichtet ist, um

• eine direkte oder inverse Fourier-Transformation auf die M Abtastwerte des empfangenen Signals anzuwenden und N transformierte Abtastwerte $Y_l$ zu liefern, wobei I eine ganze Zahl ist, die in einer Menge $S_\eta$ der Größe N variiert;

• eine Menge von N Modulationskoeffizienten $c_l^{(k)}$ zu erzielen, wobei I eine ganze Zahl ist, die in der Menge $S_\eta$ variiert,

wobei ein als $c_n^{(k)}$ bezeichneter Modulationskoeffizient mit dem Index n unter den N Modulationskoeffizienten als Produkt eines als $c_n^{(r)}$ bezeichneten Referenzmodulationskoeffizienten mit dem Index n mit einem Phasenverschiebungsterm angegeben wird, dessen Argument proportional zu n ist,

wobei der Referenzmodulationskoeffizient $c_n^{(r)}$ sich aus der Fourier-Reihenzerlegung einer Referenzwellenform unter den Ns Wellenformen ergibt, die einem Symbol mit Rang r zugeordnet ist;
• Ns Entscheidungskomponenten ausgehend von den N transformierten Abtastwerten zu ermitteln,

wobei eine als Komponente $D_l$ bezeichnete Entscheidungskomponente mit dem Index I als eine Funktion einer direkten oder inversen Fourier-Transformierten von N Termen angegeben wird, wobei I eine ganze Zahl von 0 bis Ns-1 ist,

wobei ein Term mit dem Index n unter den N Termen, wobei n eine ganze Zahl ist, die in der Menge $S_\eta$ variiert, von einem Produkt eines transformierten Abtastwerts $Y_n$ mit einem erzielten Referenzmodulationskoeffizient

$\hat{c}_n^{(r)}$ oder mit dem konjugierten Komplex des erzielten Referenzmodulationskoeffizienten abhängt;
• zu entscheiden über den Rang $\hat{k}$ des von der Wellenform übertragenen Symbols, die den M Abtastwerten zugeordnet ist, ausgehend von der als Komponente $D_k$ bezeichneten Entscheidungskomponente mit dem Index k, die einen Extremwert unter den Ns Entscheidungskomponenten darstellt.

## Claims

1. Method of generation of a pulse position modulated signal,
said modulated signal comprising a temporal succession of waveforms among Ns waveforms,
an s-th waveform among said Ns waveforms being associated with a rank symbol k of a constellation of Ns symbols, k being an integer from 0 to Ns-1,
said s-th waveform resulting from a circular permutation of the variation pattern of a basic waveform over a duration Ts, obtained by a temporal shift of k times an elementary temporal duration Tc, such that Ns*Tc=Ts,
**characterized in that** it comprises the following steps, performed for a rank symbol k of said constellation of Ns symbols:

• obtaining (E40) a set of N modulation coefficients $c_l^{(k)}$, I being an integer varying in a set $S_\eta$ of size N,

a modulation coefficient of index n among said N modulation coefficients, denoted $c_n^{(k)}$, expressed as the product of a reference modulation coefficient of index n, denoted $c_n^{(r)}$, with a phase shift term whose argument is proportional to n,

said reference modulation coefficient $c_n^{(r)}$ being derived from the Fourier series decomposition of a reference waveform, among said Ns waveforms, associated with a rank symbol r;
• generation (E41) of M temporal samples of a k-th waveform by direct or inverse Fourier transform of said set of N modulation coefficients $c_l^{(k)}$.

2. A method of generation according to claim 1,
**characterized in that** the step (E40) of obtaining said set of N modulation coefficients implements, for said modulation coefficient $c_n^{(k)}$, of the said set, the following substeps:

• reading (E401), in a first storage device, of said reference modulation coefficient $c_n^{(r)}$ resulting from the Fourier series decomposition of said basic waveform,

• multiplication (E402) of said reference modulation coefficient $c_n^{(r)}$ being by said phase shift term whose argument is proportional to n, said multiplication delivering said modulation coefficient $c_n^{(k)}$,

3. Method of generation according to claim 1,
   **characterized in that** the step (E40) of obtaining said set of N modulation coefficients implements a step (E401) of reading, in a second storage device, said modulation coefficients $c_l^{(k)}$ previously calculated.

4. method of generation according to any one of claims 1 to 3, **characterized in that** said reference modulation coefficients $c_l^{(r)}$ are obtained by carrying out the following steps:

   • Fourier series decomposition of said reference waveform, delivering a set of initial coefficients,
   • selection of a set of N reference modulation coefficients from among said initial coefficients, at least as a function of a criterion for minimizing an energy loss.

5. A method of generation according to any one of claims 1 to 4,
   **characterized in that** said phase term is proportional to:

   • $e^{-2j\pi n \frac{k}{N_s}}$ when said Fourier transform is an inverse Fourier transform, or

   • $e^{+2j\pi n \frac{k}{N_s}}$ when said Fourier transform is a direct Fourier transform.

6. Method of generation according to any one of claims 1 to 5,
   **characterized in that** said set of N modulation coefficients $c_l^{(k)}$ forms a modulation vector and **in that**, if the number M of temporal samples is greater than the number N of modulation coefficients $c_l^{(k)}$, $(M - N)$ null elements are added to said modulation vector.

7. Method of generation according to any one of claims 1 to 6,
   **characterized in that** said basic waveform has an instantaneous frequency varying linearly between a first instantaneous frequency f0 and a second instantaneous frequency f1 during the duration Ts, the second instantaneous frequency f1 being selected such that $f_1 = f_0$,

   **and in that** said reference modulation coefficient $c_n^{(r)}$ is given by $c_n^{(r)} = 2(-1)^n (-j)^{\frac{N_s}{4}} e^{-2j\pi n \frac{r}{N_s}} \int_0^{\frac{1}{2}} e^{j\pi N_s v^2} \cos(2\pi n v) \, dv$.

8. Method for the demodulation of a received signal resulting from the modulation of a signal in pulse position and the transmission of the modulated signal in a transmission channel,
   said modulated signal comprising a temporal succession of waveforms among Ns waveforms,
   a k-th waveform among said Ns waveforms being associated with a rank symbol k of a constellation of Ns symbols, k being an integer from 0 to Ns-1,
   said k-th waveform resulting from a circular permutation of the variation pattern of a basic waveform over a temporal duration Ts, obtained by a temporal shift of k times an elementary temporal duration Tc, such that Ns*Tc=Ts,
   **characterized in that** it comprises the following steps, carried out for M samples representative of a waveform included in said modulated signal:

   • direct or inverse Fourier transformation (E80) applied to said M samples of said received signal and delivering N transformed samples $Y_l$, l being an integer varying in a set $S_n$ of size N ;
   • obtaining (E81) of a set of N modulation coefficients $c_l^{(k)}$, l being an integer varying in the set $S_n$,

   a modulation coefficient of index n among said N modulation coefficients, denoted $c_n^{(k)}$, expressed as the product of a reference modulation coefficient of index n, denoted $c_n^{(r)}$, with a phase shift term whose argument is proportional to n,

   said reference modulation coefficient $c_n^{(r)}$ being derived from the Fourier series decomposition of a reference waveform, among said Ns waveforms, associated with a rank symbol r;

• determination (E82) of Ns decision components from said N transformed samples and the N modulation coefficients obtained,

a decision component of index I, denoted component $D_I$, expressed as a function of a direct or inverse Fourier transform of N terms, with I being an integer from 0 to Ns-1,

an index term n among said N terms, n being an integer varying in the set $S_\eta$, being a function of a product of the transformed sample $Y_n$ with the obtained reference modulation coefficient $c_n^{(r)}$ or with the conjugated complex of said obtained reference modulation coefficient;

• decision (E83) of the rank k of the symbol carried by said waveform associated with said M samples, on the basis of the decision component having an extremum of value among said Ns decision components, of index k, denoted component $D_k$.

9. Method of demodulation according to claim 8,
   **characterized in that** said reference modulation coefficients $c_I^{(r)}$ are obtained by carrying out the following steps:

   • Fourier series decomposition of said reference waveform, delivering a set of initial coefficients,
   • selection of a set of N reference modulation coefficients from among said initial coefficients, at least as a function of a criterion for minimizing an energy loss.

10. Method of demodulation according to any one of claims 8 or 9,
    **characterized in that** the Fourier transform applied to said M samples of said received signal is direct,
    **in that** the method comprises a step of obtaining (E85) N parameters representative of the transmission channel,

    **and in that** said k-th component $D_k$ is expressed in a form proportional to the real part of $\sum_{n \in S_\eta} Y_n H_n^* c_n^{(r)*} e^{2j\pi\frac{nk}{N_s}}$,

    or of its conjugate complex,
    with $H_n$, n being an integer varying in the set $S_\eta$, a parameter representative of the transmission channel, obtained by applying a direct Fourier transform to N temporal samples of the impulse response of said channel.

11. Method of demodulation according to any one of claims 8 or 9,
    **characterised in that** the Fourier transform applied to said M samples of said received signal is inverse,
    **in that** the method comprises a step of obtaining (E85) N parameters representative of the transmission channel,

    **and in that** said k-th component $D_k$ is expressed in a form proportional to the real part of $\sum_{n \in S_\eta} Y_n H_n^* c_n^{(r)*} e^{2j\pi\frac{nk}{N_s}}$, or of its conjugate complex,
    with $H_n$, n being an integer varying in the set $S_\eta$, a parameter representative of the transmission channel, obtained by applying a direct Fourier transform to N temporal samples of the impulse response of said channel.

12. Method according to any one of claims 8 to 11,
    **characterized in that** said basic waveform has an instantaneous frequency varying linearly between a first instantaneous frequency f0 and a second instantaneous frequency f1 for the duration Ts, the second instantaneous frequency f1 being selected such that $f_1 = -f_0$,
    **and in that** said reference modulation coefficient $c_n^{(r)}$ is given by $c_n^{(r)} =$

    $$2(-1)^n (-j)^{\frac{N_s}{4}} e^{-2j\pi n \frac{r}{N_s}} \int_0^{\frac{1}{2}} e^{j\pi N_s v^2} \cos(2\pi n v)\, dv.$$

13. Computer program product, comprising program code instructions for carrying out a method according to any one of claims 1 to 12, when said program is executed on a computer.

14. Device for generation (300, 300') of a pulse position modulated signal, said modulated signal comprising a temporal succession of waveforms among Ns waveforms,
    a k-th waveform among said Ns waveforms being associated with a rank symbol k of a constellation of Ns symbols, k being an integer from 0 to Ns-1,
    said k-th waveform resulting from a circular permutation of the variation pattern of a basic waveform over a temporal duration Ts, obtained by a temporal shift of k times an elementary temporal duration Tc, such that Ns*Tc=Ts,
    **characterized in that** it comprises a reprogrammable computing machine (602, 612) or a dedicated computing machine, capable of and configured for:

• obtaining a set of N modulation coefficients $c_l^{(k)}$, I being an integer varying in a set $S_\eta$,

• a modulation coefficient of index n among said N modulation coefficients, denoted $c_n^{(k)}$, expressed as the product of a reference modulation coefficient of index n, denoted $c_n^{(r)}$, with a phase shift term whose argument is proportional to n,

said reference modulation coefficient $c_n^{(r)}$ being derived from the Fourier series decomposition of a reference waveform, among said Ns waveforms, associated with a rank symbol r;

• generation of M temporal samples of a k-th waveform by direct or inverse Fourier transform of said set of N modulation coefficients $c_l^{(k)}$

15. Device for the demodulation of a received signal resulting from a modulation of a signal in pulse position and the transmission of the modulated signal in a transmission channel,

said modulated signal comprising a temporal succession of waveforms among Ns waveforms,

a k-th waveform among said Ns waveforms being associated with a symbol of rank k of a constellation of Ns symbols, k being an integer from 0 to Ns-1,

said k-th waveform resulting from a circular permutation of the variation pattern of a basic waveform over a temporal duration Ts, obtained by a temporal shift of s times an elementary temporal duration Tc, such that Ns*Tc=Ts,

**characterized in that** it comprises a reprogrammable computing machine (902) or a dedicated computing machine, capable of and configured for:

• application of a direct or inverse Fourier transform to said M samples of said received signal and delivering N transformed samples $Y_l$, I being an integer varying in a set $S_\eta$ of size N ;

• obtaining of a set of N modulation coefficients $c_l^{(k)}$, I being an integer varying in the set $S_\eta$,

a modulation coefficient of index n among said N modulation coefficients, denoted $c_n^{(k)}$, expressed as the product of a reference modulation coefficient of index n, denoted $c_n^{(r)}$, with a phase shift term whose argument is proportional to n,

said reference modulation coefficient $c_n^{(r)}$ being derived from the Fourier series decomposition of a reference waveform, among said Ns waveforms, associated with a rank symbol r;

• determination of Ns decision components from said N transformed samples,

a decision component of index I, denoted component $D_l$, expressed as a function of a direct or inverse Fourier transform of N terms, with I being an integer from 0 to Ns-1,

an index term n among said N terms, n being an integer varying in the set $S_\eta$, being a function of a product of the transformed sample $Y_n$ with the obtained reference modulation coefficient $c_n^{(r)}$ or with the conjugated complex of said obtained reference modulation coefficient;

• decision of the rank k of the symbol carried by said waveform associated with said M samples, on the basis of the decision component having an extremum of value among said Ns decision components, of index k, denoted component $D_k$.

**Figure 1**

**Figure 6a**

**Figure 6b**

**Figure 2a**

**Figure 2b**

**Figure 3a**

**Figure 3b**

**Figure 4**

**Figure 5**

**Figure 7**

**Figure 8**

**Figure 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2449690 B1

**Littérature non-brevet citée dans la description**

- **M. K. OZDEMIR ; H. ARSLAN.** Channel estimation for wireless ofdm systems. *IEEE Communications Surveys & Tutorials,* vol. 9 (2), 18-48
- *Second Quarter,* 2007

- Channel Estimation in OFDM Systems. **SRISHTANSH PATHAK ; HIMANSHU SHARMA.** International Journal of Advanced Research in Computer Science. Software Engineering, 03 Mars 2013, vol. 3